**Europäisches Patentamt**

**European Patent Office**

**Office européen des brevets**

(19)

(11) Veröffentlichungsnummer: **0 146 141**
A2

# (12) EUROPÄISCHE PATENTANMELDUNG

(21) Anmeldenummer: 84115699.5

(22) Anmeldetag: 18.12.84

(51) Int. Cl.⁴: **B 60 P 1/64,** B 62 D 53/06

(30) Priorität: 19.12.83 DE 3345838

(43) Veröffentlichungstag der Anmeldung: 26.06.85
Patentblatt 85/26

(84) Benannte Vertragsstaaten: **AT BE CH DE FR GB LI NL**

(71) Anmelder: **Krein, Walter, Waldstrasse 19,
D-8903 Bobingen (DE)**

(72) Erfinder: **Krein, Walter, Waldstrasse 19,
D-8903 Bobingen (DE)**

(74) Vertreter: **Patentanwälte Dipl.-Ing. R. Holzer Dipl.-Ing.
(FH) W. Gallo, Philippine-Welser-Strasse 14,
D-8900 Augsburg (DE)**

(54) Rahmenkonstruktion für Fahrzeuganhänger.

(57) Die Erfindung betrifft eine Rahmenkonstruktion für Fahrzeuganhänger einschliesslich Sattelauflieger mit Wechselaufbau, insbesondere Kippanhänger, bei welcher der Brückenrahmen (1) des Aufbaus als eigensteifer Tragrahmen ausgebildet und mittels Schnellkupplungen (11, 12) lösbar mit einem Vorderachsgestell (2) oder einer Sattelplatte (42) und einem Hinterachsgestell (3) lösbar verbindbar ist, wobei das Vorderachsgestell (2) bzw. die Sattelplatte (42) und das Hinterachsgestell (3) vorzugsweise durch ein Gestänge oder einen nicht tragfähigen, leichten Verbindungsrahmen (4) miteinander verbindbar sind.

EP 0 146 141 A2

PATENTANWÄLTE
DIPL. ING. R. HOLZER
DIPL. ING. (FH) W. GALLO
PHILIPPINE-WELSER-STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉÉS PRÈS L'OFFICE
EUROPÉEN DES BREVETS
8900 AUGSBURG
TELEFON 0821/516475
TELEX 532202 PATOL D

0146141

- 1 -

Augsburg, den 18. Dezember 1984
Anw.Aktenz.: K.489 Europa

Walter   K r e i n
Waldstraße 19,
8903   B o b i n g e n

Rahmenkonstruktion für Fahrzeuganhänger

Die Erfindung betrifft eine Rahmenkonstruktion für Fahrzeuganhänger mit Wechselaufbau, insbesondere Kippanhänger.

Herkömmliche Rahmenkonstruktionen für Fahrzeuganhänger bestehen aus einem stabilen, biege- und verwindungssteifen tragfähigen Fahrgestellrahmen mit einem damit verbundenen Vorderachsgestell und einem Hinterachsgestell, während der Aufbau einen eigenen, als Brückenrahmen bezeichneten Rahmen aufweist. Dieser Brückenrahmen ist seinerseits so stabil ausgebildet, daß er die durch das Ladegut auftretenden Belastungen aufnehmen kann.

Die Verwendung von Wechselpritschen hat den Vorteil, daß während der Be- und Entladezeit kein völliger Stillstand des Anhängers notwendig ist, sondern das Fahrgestell von der zu be- oder entladenden Pritsche getrennt und mit einer anderen Pritsche weiter gefahren werden kann. Die vom Fahrgestell getrennte Pritsche steht dabei auf einsteckbaren oder schwenkbar fest angebrachten Stützen, die im Bereich des vorderen und hinteren Pritschenendes angeordnet sind. Der Brückenrahmen muß dabei so biegfest sein, daß er auch in beladenem Zustand zwischen den Stützen nicht durchhängt, da anderenfalls die Bordwände sich nicht mehr öffnen lassen.

Bei Hinterkippaufbauten ist meist eine Kipp-Presse etwa im Längenmittenbereich des Fahrzeugs im Fahrgestellrahmen angeordnet, oder es sind zwei mit Abstand entlang der Fahrzeuglängsachse angeordnete Kipp-Pressen vorgesehen, um den Hinterkippaufbau hochzukippen. Der Brückenrahmen muß dabei selbstverständlich so biegfest und verwindungssteif ausgelegt sein, daß er durch die punktförmig angreifende Kipp-Presse einerseits und die Belastung durch das Ladegut andererseits keine wesentliche Durchbiegung oder Verwindung erfährt.

Infolgedessen weist die herkömmliche Rahmenkonstruktion für Fahrzeuganhänger einschließlich Sattelhänger mit Wechsel- oder Kippaufbau zwei hinsichtlich ihrer Stabilität und Tragfähigkeit praktisch gleichwertige Rahmen auf, nämlich den Fahrgestellrahmen einerseits und den Brückenrahmen andererseits. Diese beiden tragfähigen Rahmen weisen natürlich beide ein ihrer Tragfähigkeit entsprechendes Konstruktionsgewicht auf, was zur Folge hat, daß herkömmliche Rahmenkonstruktionen für Fahrzeuganhänger mit Wechsel- oder Kippaufbau ein beträchtlich höheres Gewicht als vergleichbare Rahmenkonstruktionen für Fahrzeuganhänger mit festem Aufbau haben. Durch gesetzliche Beschränkungen auf ein höchstzulässiges Fahrzeuggesamtgewicht wirkt sich dieser Umstand dahingehend aus, daß die maximale Nutzlast bei Anhängern mit Wechsel- oder Kippaufbau kleiner ist als bei Anhängern mit festem Aufbau.

Der Erfindung liegt die Aufgabe zugrunde, eine Rahmenkonstruktion der eingangs genannten Gattung im Hinblick auf ein geringeres Fahrzeuggewicht zu verbessern, gleichzeitig aber vielseitige und leicht wechselbare Einsatzmöglichkeiten zu bieten.

Diese Aufgabe wird gemäß der Erfindung durch die im kennzeichnenden Teil des Anspruchs 1 angegebene Anordnung gelöst.

Vorteilhafte Ausgestaltungen der Erfindung sind Gegenstand der Unteransprüche.

Ein Grundgedanke der Erfindung liegt darin, daß die herkömmliche Doppelanordnung zweier praktisch voll tragfähiger Rahmen, nämlich eines das Vorderachsgestell und das Hinterachsgestell verbindenden Fahrgestellrahmens einerseits und des dem Aufbau zugeordneten Brückenrahmens andererseits, durch einen einzigen tragfähigen Rahmen ersetzt wird, indem der Brückenrahmen so ausgebildet wird, daß er gleichzeitig die Funktion des Fahrgestellrahmens im Fahrbetrieb wahrnimmt. Während bei herkömmlichen Rahmenkonstruktionen der in Rede stehenden Gattung der Brückenrahmen einfach auf dem gesonderten Fahrgestellrahmen aufliegt und lediglich mittels Verriegelungen in seiner Lage auf dem Fahrgestellrahmen gesichert ist, sind gemäß der Erfindung die Achsgestelle über Schnellkupplungen unmittelbar mit dem Brückenrahmen verbindbar, was natürlich die Verwendung zusätzlicher Verriegelungen nicht ausschließt.

Am Vorderachsgestell ist in üblicher Weise die mit der Anhängerdeichsel verbundene Vorderachse über einen Drehkranz lenkbar angeordnet. Selbstverständlich können aber auch einzeln gelenkte Vorderräder Anwendung finden. Das Hinterachsgestell kann einachsig oder mehrachsig ausgebildet und gegebenenfalls mit einer Einrichtung zur Lenkung der Hinterräder ausgestattet sein.

Durch den Wegfall des bisher üblichen gesonderten Fahrgestellrahmens ergibt sich eine beträchtliche Gewichts- und Kosteneinsparung.

Darüberhinaus bringt die Erfindung jedoch einen erheblichen Vorteil dahingehend, daß im Falle des Auftretens von Schäden an Vorderachsgestell oder Hinterachsgestell ein einfacher Austausch des betreffenden Achsgestells möglich ist und somit nicht das ganze Fahrzeug durch die notwendige Reparatur stillgesetzt wird, sondern lediglich das defekte Achsgestell zur Reparatur gebracht wird, während das übrige Fahrzeug mit einem Austausch-Achsgestell weiter gefahren werden kann.

Der leichte Verbindungsrahmen bildet eine vom Brückenrahmen, der gleichzeitig den eigentlichen Fahrgestellrahmen bildet, unabhängige Verbindung von Vorderachsgestell und Hinterachsgestell, um insbesondere bei Wechselpritschen ein einfaches Herausfahren bzw. Einfahren der Achsgestelle unter der betreffenden Pritsche zu ermöglichen. Diese mit den Achsgestellen wiederum lösbar verbundene Achsgestellverbindung kann, da sie lediglich als Zugverbindung zwischen Vorderachsgestell und Hinterachsgestell dient, durch ein Gestänge oder einen nicht tragfähigen und dadurch sehr leichten Verbindungsrahmen gebildet sein. Dieses Gestänge bzw. dieser Verbindungsrahmen kann außerdem längenverstellbar ausgebildet sein,

- 5 -

so daß, beispielsweise für eine Leerfahrt ohne Ladepritsche, der Abstand zwischen Vorderachsgestell und
Hinterachsgestell verkürzt werden kann. Weiterhin eröffnet diese Ausbildung die Möglichkeit, unterschiedlich
lange Wechselpritschen wahlweise zu verwenden.

Für die Gestaltung der Schnellkupplungen bieten sich
zahlreiche Möglichkeiten an, wozu auch die üblicherweise
verwendeten Twist-Lock gehören.

Insbesondere können diese Schnellkupplungen sattelkupplungsartig ausgebildet sein, was den
Vorteil eines schnellen Verbindens und Trennens der Achsgestelle mit dem bzw. von dem Brückenrahmen bringt, wobei
eine bevorzugte Anordnung, gemäß welcher
der Königszapfen bei der dem Vorderachsgestell zugeordneten
Schnellkupplung am Vorderachsgestell und bei der dem
Hinterachsgestell zugeordneten Schnellkupplung am Brückenrahmen angeordnet ist, den Vorteil bringt, daß beim Einfahren der Achsgestelle unter den Brückenrahmen und auch
beim Herausfahren der Achsgestelle ein ungehindertes Durchfahren des Hinterachsgestells unter dem brückenrahmenseitigen Kupplungsteil der vorderen Schnellkupplung
möglich ist.

Damit beim Einfahren und Ausfahren der Achsgestelle, die vorzugsweise durch die schon oben erörterte
Achsgestellverbindung miteinander verbunden sind, das
Hinterachsgestell vom vorderen Ende des Brückenrahmens
her unter diesen gefahren werden kann, ist vorzugsweise
die dem Vorderachsgestell zugeordnete Schnellkupplung auf
einem etwa höheren Niveau als die dem Hinterachsgestell

0146141

zugeordnete Schnellkupplung angeordnet, so daß das Hinterachsgestell unter den vorderen, brückenrahmenseitigen
Schnellkupplungselementen hindurchrangiert werden kann.
Stattdessen können die beiderseits der Fahrzeuglängsachse
angeordneten brückenrahmenseitigen Kupplungselemente der
vorderen Schnellkupplung einen größeren Querabstand voneinander haben als die der hinteren Schnellkupplung, so
daß das Hinterachsgestell mit seinen Kupplungselementen
zwischen ihnen hindurchfahrbar ist. Jedoch ermöglicht
die erstere Möglichkeit mit höhenversetzten Schnellkupplungen für Vorder- und Hinterachsgestell ein leichteres
Rangieren.

Die Schnellkupplungen können so gestaltet sein, daß das
Schließen und Verriegeln der Kupplung beim Einfahren vollautomatisch erfolgt und keine manuelle Tätigkeit mehr
erfordert. Es ist auch möglich, die Schnellkupplungen so
auszubilden, daß sie doppeltwirkend sind und ein Einfahren
von beiden Aufbaustirnseiten her ermöglichen.

Die Schnellkupplungen können entweder so ausgebildet
sein, daß sie durch eine rein horizontale Einfahrbewegung
eingekuppelt bzw. ausgekuppelt werden können, oder sie
können für eine relative Vertikalbewegung der Kupplungselemente zum Ein- oder Auskuppeln ausgelegt sein.

Weiterhin können die Schnellkupplungen vorteilhaft
so ausgebildet sein, daß sie gleichzeitig als Seiten- und/oder
Hinterkippscharniere für Kippbetrieb verwendbar sind.

Die erfindungsgemäße Rahmenkonstruktion ist auch für
Kippaufbauten vorgesehen, wobei eine Auslegung der Rahmenkonstruktion sowohl als Hinterkipprahmen als auch als Zweiseiten- oder Dreiseitenkipprahmen möglich ist. Da hierbei nicht der Brückenrahmen selbst, sondern jeweils der den Achsgestellen zugeordnete Teil der betreffenden Schnellkupplung mit einer in dem betreffenden Achsgestell angeordneten Kipp-Presse verbunden ist, können ganz normale Wechselpritschen durch Verwendung normaler Achsgestelle oder durch Verwendung von für einen Kippbetrieb eingerichteten Achsgestellen wahlweise als Normalpritschen oder als Kipp-Pritschen eingesetzt werden, oder mit anderen Worten, auch Kippaufbauten können als Wechselpritschen verwendet werden, was bisher nicht der Fall ist. Besonders vorteilhaft ist dabei, daß beim Umpritschen nur die Schnellkupplungen betätigt werden müssen, dagegen keine Verbindungen mit der Kipp-Presse herzustellen oder zu lösen sind.

Das Prinzip, eine entsprechend angeordnete Kipp-Presse auf einen ausfahrbaren Teil der Schnellkupplung wirken zu lassen, kann auch bei einer gewöhnlichen Sattelzugmaschine Anwendung finden, indem eine im Fahrgestellrahmen der Sattelzugmaschine eingebaute Kipp-Presse auf einen ausfahrbaren Teil der Sattelkupplung wirkt.

Dem leichteren Rangieren dienen Führungen zwischen dem Brückenrahmen und den Achsgestellen beim Ein- und Ausfahren. Diese Führungen nehmen sowohl die Seitenführung als auch die Höhenführung der Achsgestelle relativ zum Brückenrahmen beim Ein- und Ausfahren wahr, wobei die Federn der Achsgestelle beim Einfahren natürlich ebenfalls in Abhängigkeit von der Höhenführung von selbst zusammengedrückt werden. Damit läßt sich beim Einfahren der Achsgestelle das seiten- und höhenrichtige Einführen der Schnellkupplungselemente ineinander bewerkstelligen.

Die Erfindung ist nicht nur auf normale, mittels einer Anhängerdeichsel an ein Zugfahrzeug anzuhängende Anhänger, sondern auch auf Sattelanhänger anwendbar.

0146141

Der anhängerseitige Teil der Sattelkupplung ist dabei vorzugsweise nicht fest mit dem Brückenrahmen verbunden, sondern in gleicher Weise wie die Achsgestelle über eine Schnellkupplung, so daß, je nach Bedarf, der Brückenrahmen mit einer Sattelplatte ausgestattet, als Sattelauflieger oder, anstelle der Sattelplatte mit einem Vorderachsgestell ausgestattet, als normaler Anhänger einsetzbar ist. Hieraus ergibt sich ein weiterer Vorteil, daß nämlich auch Anhängerpritschen normaler Länge, die im Überlandverkehr als normale Anhänger gefahren werden, für die Zustellung in Städten als Sattelauflieger kurzer Sattelzüge benützt werden können, die wesentlich beweglicher sind als normale Fernlastzüge.

Die Erfindung berücksichtigt im Zusammenhang mit der Anwendung der erfindungsgemäßen Rahmenkonstruktion für Sattelanhänger auch die Möglichkeit einer Hinterachslenkung in Abhängigkeit von der bei Kurvenfahrten auftretenden jeweiligen Abknickung zwischen Sattelzugmaschine und Anhängerbrückenrahmen.

Aus Kosten- und Gewichtsgründen ist es wünschenswert, Kippeinrichtungen nur dann zu verwenden, wenn sie wirklich gebraucht werden. Das ständige Mitführen einer Kippeinrichtung, die nur gelegentlich benötigt wird, verringert durch das Eigengewicht der Kippeinrichtung die verfügbare Ladekapazität, und ein mit einer Kippeinrichtung ausgestattetes Fahrzeug ist teurer als ein Fahrzeug ohne Kippeinrichtung und, wenn die Kippeinrichtung nur selten gebraucht wird, ziemlich unwirtschaftlich. Daher ist es wünschenswert, eine Rahmenkonstruktion nach der Erfindung im Bedarfsfall mit einer Kippeinrichtung ausstatten zu können.

Im Falle der Ausbildung der Rahmenkonstruktion mit einem leichten Verbindungsrahmen zwischen den Achsgestellen wird ein volltragfähiger Kipprahmen auf den Verbindungsrahmen aufgelegt, was beispielsweise mittels

0146141

eines Gabelstaplers oder eines ähnlichen üblichen Flurförderzeugs geschehen kann, wobei zweckmäßigerweise die
Rahmenprofile von Kipprahmen und Verbindungsrahmen zueinander komplementär sind und schon hierdurch eine Lagesicherung des Kipprahmens auf dem Verbindungsrahmen erreicht
wird. Der tragfähige Kipprahmen nimmt dabei alle zwischen
den Achsgestellen auftretenden Biegebeanspruchungen
auf, so daß der leichte Verbindungsrahmen nicht belastet
wird.

Will man mit Wechselpritschen im Kippbetrieb arbeiten,
stellt sich natürlich das Problem der sicheren Verbindung
des Kippstempelkopfes mit dem Brückenrahmen beim Hochkippen,
wobei diese Verbindung einerseits gelenkig und lösbar sein,
andererseits aber gegen ein Abgleiten des Kippstempelkopfes
vom brückenrahmenseitigen Gegenstück gesichert sein muß.
Greift der beispielsweise kugelförmige Kippstempelkopf in
eine entsprechend tief bemessene Aufnahmeöffnung des
Brückenrahmens ein, werden zwar die eben genannten Forderungen erfüllt, aber es stellt sich das Problem, daß,
wenn der Brückenaufbau abgepritscht werden soll, der
Kippstempelkopf sich nicht selbsttätig nach unten aus
der Aufnahmeöffnung des Brückenrahmens herausbewegt und
daher zum Abpritschen eine relative Vertikalbewegung
zwischen Kipp-Presse und Brückenrahmen erforderlich ist.
Eine Lösungsmöglichkeit hierzu ist ein die Hubkraft
auf dem Brückenrahmen übertragendes Bauteil, das über
ein Zugglied mit der Hinterkippachse verbunden und
bezüglich dieser zwangsgeführt ist und an der
Brückenrahmenunterseite nur eine seitliche Führung des
Kippstempelkopfes gegen seitliches Abgleiten erfordert
und somit ein problemloses Ein- und Ausfahren der Achsgestelle mit dem Kipprahmen unter dem Brückenrahmen
ermöglicht, während ein Ausweichen des Kippstempelkopfes
in Fahrzeuglängsrichtung durch das den Kippstempelkopf
bezüglich der Hinterkippachse zwangsführende Zugglied
verhindert wird.

0146141

Der Kipprahmen kann auch mit zwei Hubstempeln im Verlauf der Fahrzeuglänge ausgebildet sein, die für Seitenkippbetrieb oder für Dreiseitenkippbetrieb vorgesehen sind. Die beiden Hubstempel werden dabei zum Seitenkippen jeweils über eine Kurbelkinematik gleichzeitig angehoben, wozu ein zwischen den beiden Kurbelarmen angeordnetes Betätigungsorgan in Form eines Hydraulikzylinders oder dgl. dient.

Für einen Zweiseiten- oder Dreiseitenkippbetrieb müssen je nach Lage der jeweiligen Kippachse an der einen oder anderen Fahrzeugseite oder an der Fahrzeugrückseite die Verriegelungen an den jeweils anderen Fahrzeugseiten gelöst werden, was beispielsweise mit umsteckbaren Scharnierbolzen bewerkstelligt werden kann. Eine bessere Lösungsmöglichkeit ist die Verwendung eines Schnellverriegelungsmechanismus, der ein selbsttätiges Schließen und Sichern bei jedem Abkippvorgang bewirkt, so daß die bei der Verwendung umsteckbarer Scharnierbolzen gegebene Gefahr des Vergessens einer Verriegelung nach einem Abkippvorgang ausgeschlossen ist. Dieser Schnellverriegelungsmechanismus kann gleichzeitig als Kippgelenk, nämlich als Seitenkipp- oder Hinterkippscharnierlager oder als kombiniertes Seitenkipp- und Hinterkippdrehlager ausgebildet sein.

Beim Abpritschen ist es notwendig, den Aufbau zur Entlastung der Achsgestellfedern zunächst anzuheben und dann in der angehobenen Stellung mittels eingesteckter oder heruntergeklappter Beine zu unterstützen, um die entlasteten Achsgestelle unter dem Brückenrahmen herauszufahren zu können. Dieses Anheben des Brückenrahmens erfolgt üblicherweise pneumatisch oder hydraulisch, was einen beträchtlichen Aufwand bedingt. Die Ansprüche 8 und 9 geben abgewandelte Konstruktionen üblicher Blattfederaggregate zur Abfederung der Achsgestelle derart an, daß diese als sehr einfache Lifteinrichtung zum Anheben des Brückenrahmens verwendet werden können.

Bei der Anordnung nach Anspruch 8 arbeitet diese Lifteinrichtung folgendermaßen: Bei angezogener Anhängerbremse schiebt das Zugfahrzeug den Anhänger geringfügig nach rückwärts, wobei sich wegen des Vertikalversatzes der Anlenkstelle des Achsführungshebels am vorderen Federbock und der betreffenden Achse ein Drehmoment einstellt, welches die Anlenkstelle des Achsführungshebels am vorderen Federbock um die gebremste Achse herum nach hinten zu schwenken sucht. Dadurch hebt sich das Achsgestell gegenüber der Achse an, wobei gleichzeitig das Blattfederpaket im hinteren Federbock nach unten auslenkt. Damit läßt sich leicht eine Anhebung von 10 cm bis 15 cm erreichen, was aufgrund der schon oben beschriebenen Konstruktion der Schnellkupplungen, die zum Aus- und Einkuppeln keinerlei vertikale Relativbewegung zwischen Achsgestellen und Brückenrahmen erfordern, ohne weiteres ausreicht.

Bei der Anordnung nach Anspruch 9 arbeitet die Lifteinrichtung ähnlich, wobei jedoch das Blattfederpaket nicht ausgelenkt wird. Wenn der Anhänger bei angezogener Anhängerbremse nach rückwärts gedrückt wird, rollt das betreffende Rad geringfügig nach hinten, und dreht wegen der angezogenen Bremse die Achskonstruktion mit, die somit ebenfalls eine Drehung um ihre geometrische Achse ausführt. Dabei wird der nach vorne von der Achse wegragende Kurbelarm nach oben geschwenkt und hebt über das daran angelenkte Verbindungsglied das Blattfederpaket und somit das ganze Achsgestell an. Die gleiche

0146141

Wirkung ließe sich auch durch geringfügiges Vorwärtsziehen des Anhängers bei angezogener Bremse erreichen,
wenn der Kurbelarm von der Achse seitlich nach rückwärts
wegragt.

Die Konstruktion nach Anspruch 9 ist gegenüber
derjenigen nach Anspruch 8 insofern etwas günstiger,
als das Blattfederpaket und seine Verbindung mit dem
vorderen Federbock weniger beansprucht werden, da keine
Auslenkung des Blattfederpakets stattfindet.

Die Erfindung wird nachstehend anhand einiger Ausführungsbeispiele unter Bezugnahme auf die anliegenden
Zeichnungen näher erläutert. In den Zeichnungen zeigt:

Fig. 1    eine Rahmenkonstruktion nach der
          Erfindung mit sattelkupplungsartigen Schnellkupplungen im
          Aufriß,

Fig. 2    die Achsgestelle der Rahmenkonstruktion in Fig. 2 in Draufsicht,

Fig. 3    eine als Hinterkipprahmen abgewandelte
          Rahmenkonstruktion ähnlich derjenigen
          nach den Fig. 1 und 2,

Fig. 4    eine Rahmenkonstruktion nach der
          Erfindung mit Zapfenverbindungen
          als Schnellkupplungen im Aufriß,

Fig. 5    in vergrößerter Darstellung einen
          Querschnitt in der Ebene V-V in
          Fig. 4,

0146141

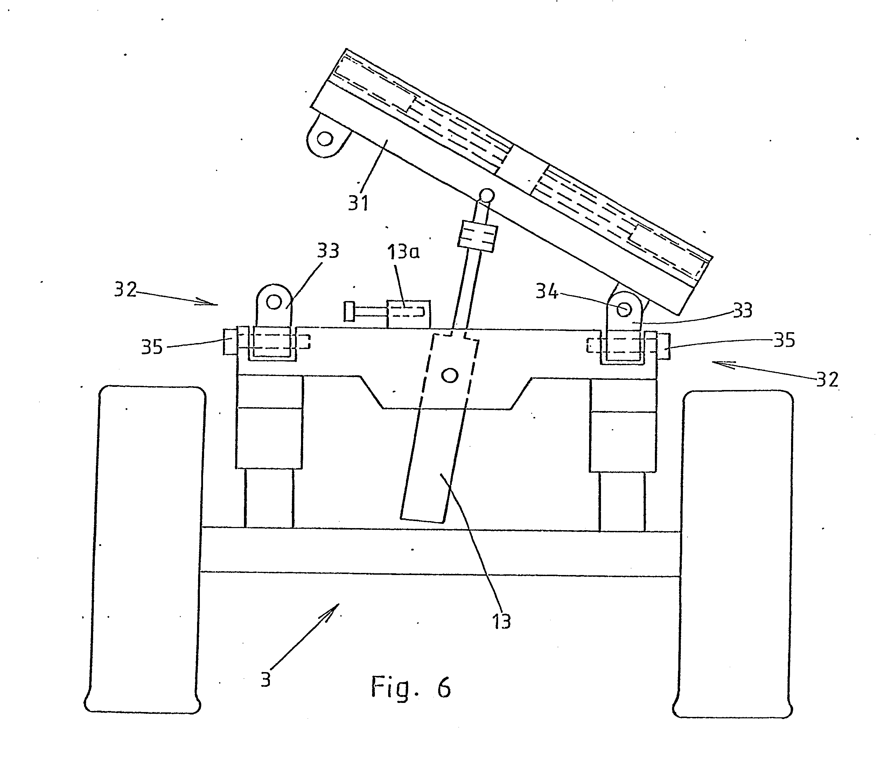

Fig. 6                in Stirnansicht ein Achsgestell
                      mit Seitenkippeinrichtung in nach
                      rechts gekippter Stellung,

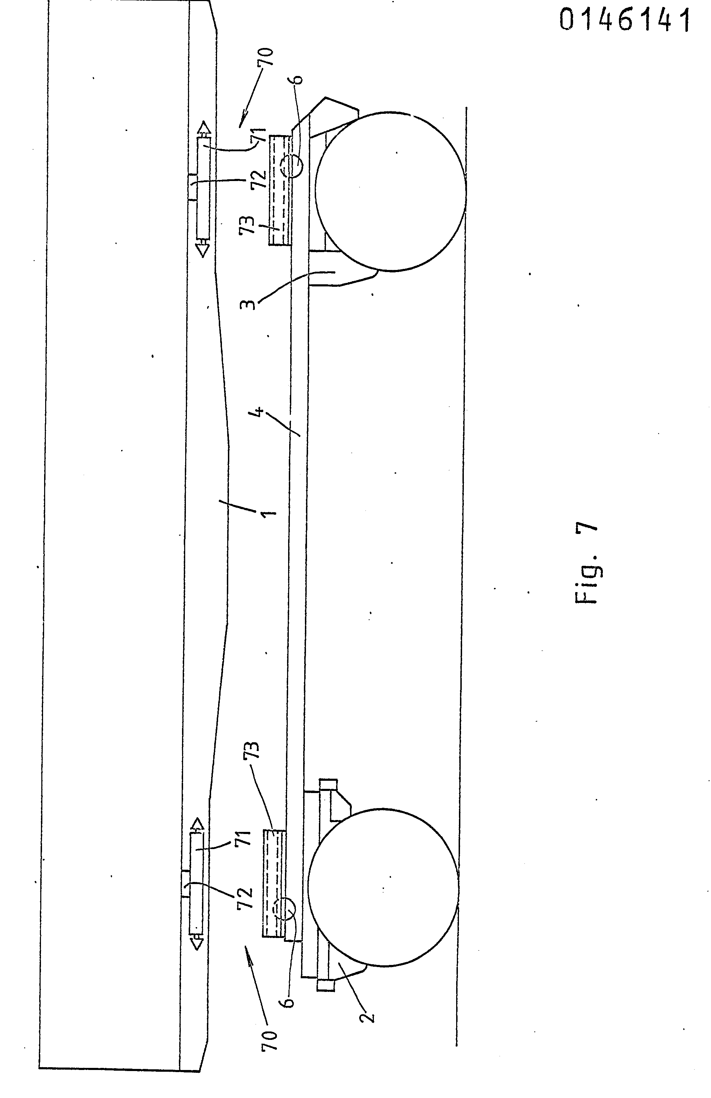

Fig. 7                eine weitere Ausführungsform einer
                      Rahmenkonstruktion nach der Erfindung mit Zapfenverbindungen als
                      Schnellkupplungen im Aufriß,

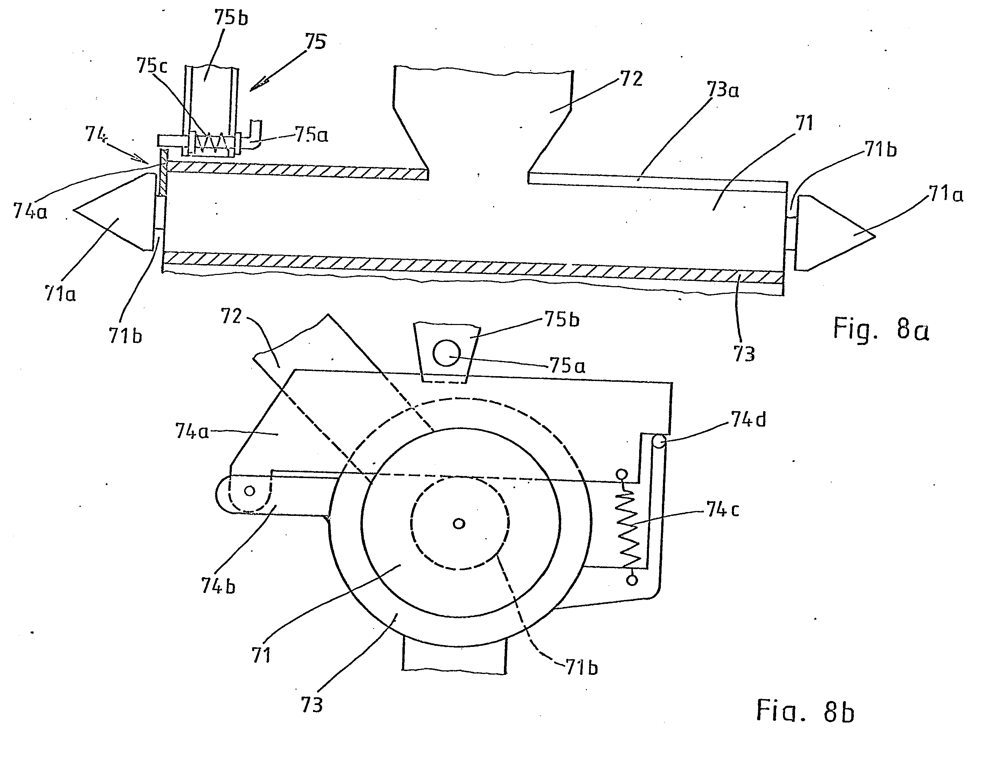

Fig. 8a               eine Schnellkupplung der Rahmenkonstruktion nach Fig. 7 im
                      Längsschnitt,

Fig. 8b               die Schnellkupplung nach Fig. 8a
                      in Stirnansicht,

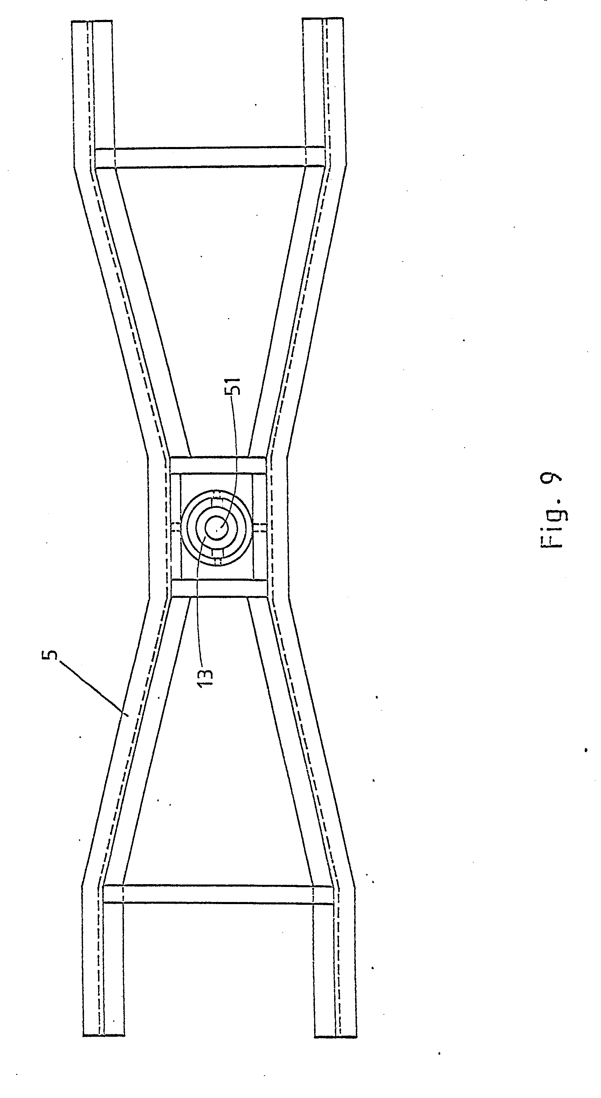

Fig. 9                einen auf eine Rahmenkonstruktion
                      nach Fig. 7 auflegbaren Kipprahmen
                      mit Mittelpresse in Draufsicht,

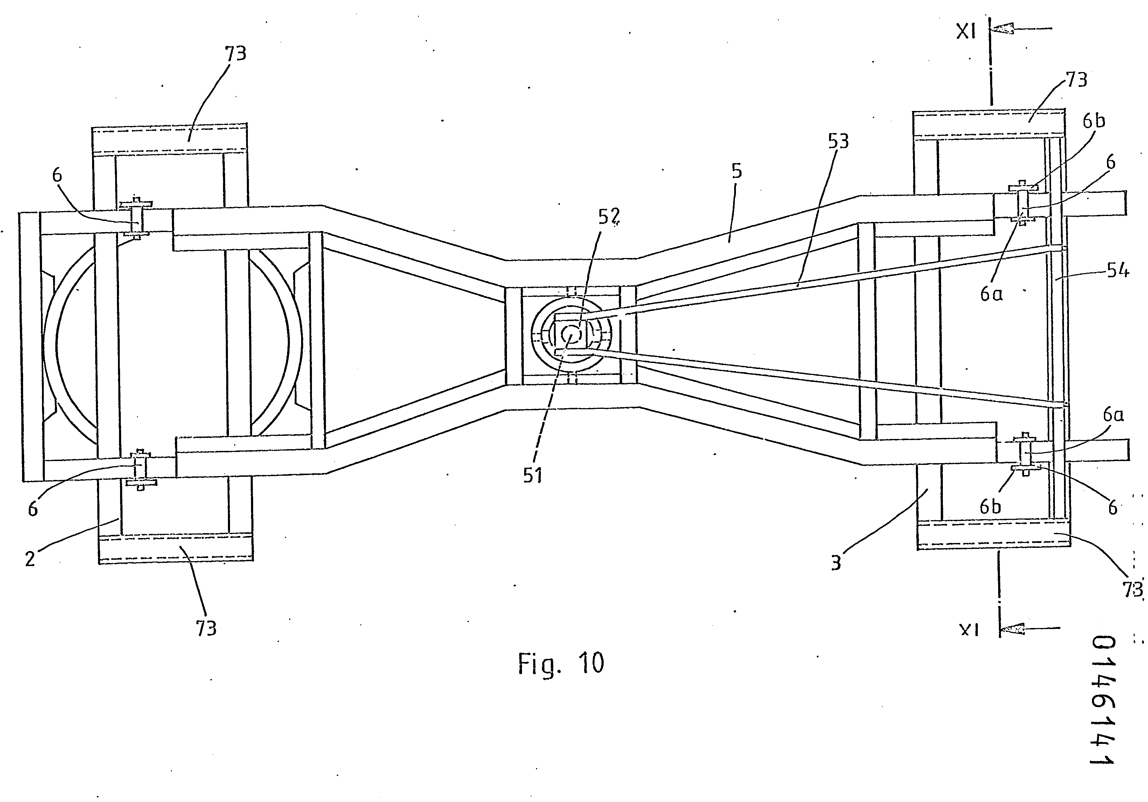

Fig. 10               eine Rahmenkonstruktion nach Fig. 7
                      mit einem aufgelegten Kipprahmen
                      nach Fig. 9 in Draufsicht,

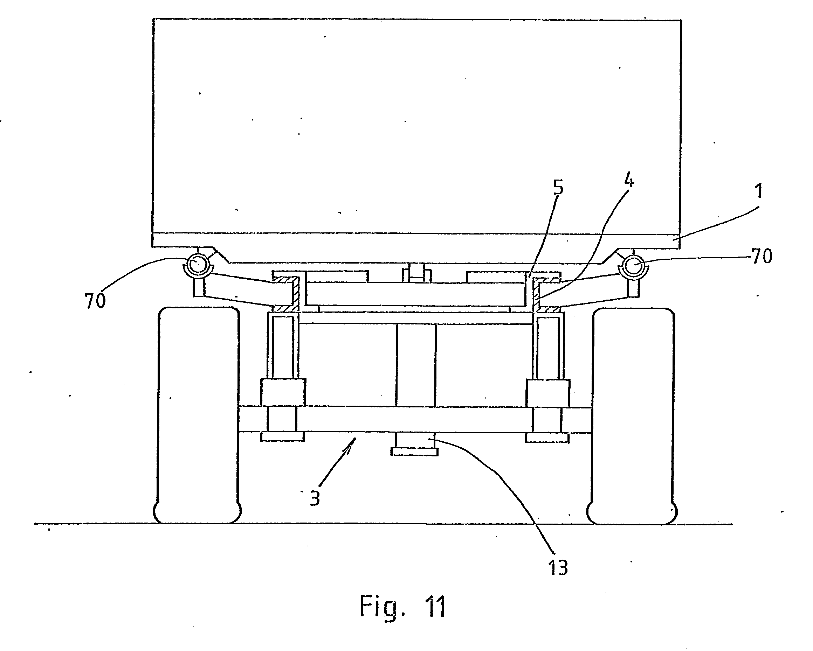

Fig. 11               einen Querschnitt längs der
                      Ebene XI-XI in Fig. 10,

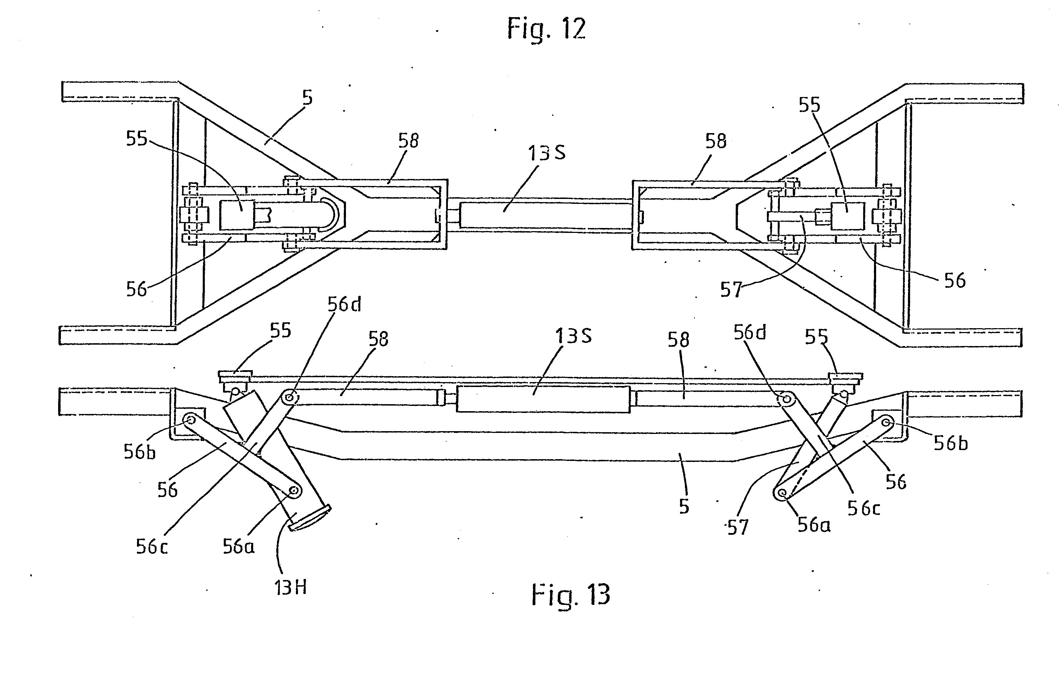

Fig. 12               einen abgewandelten auflegbaren
                      Kipprahmen mit zwei Hubstempeln
                      in Draufsicht,

Fig. 13               den Kipprahmen nach Fig. 12 in
                      Seitenansicht,

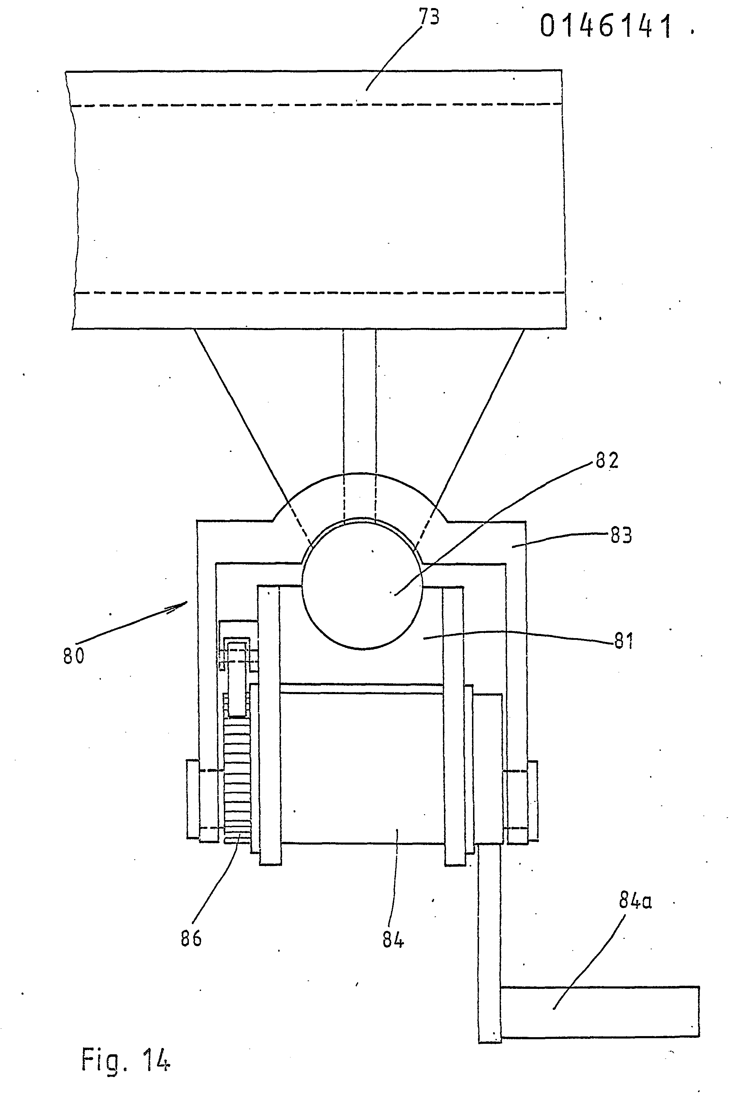

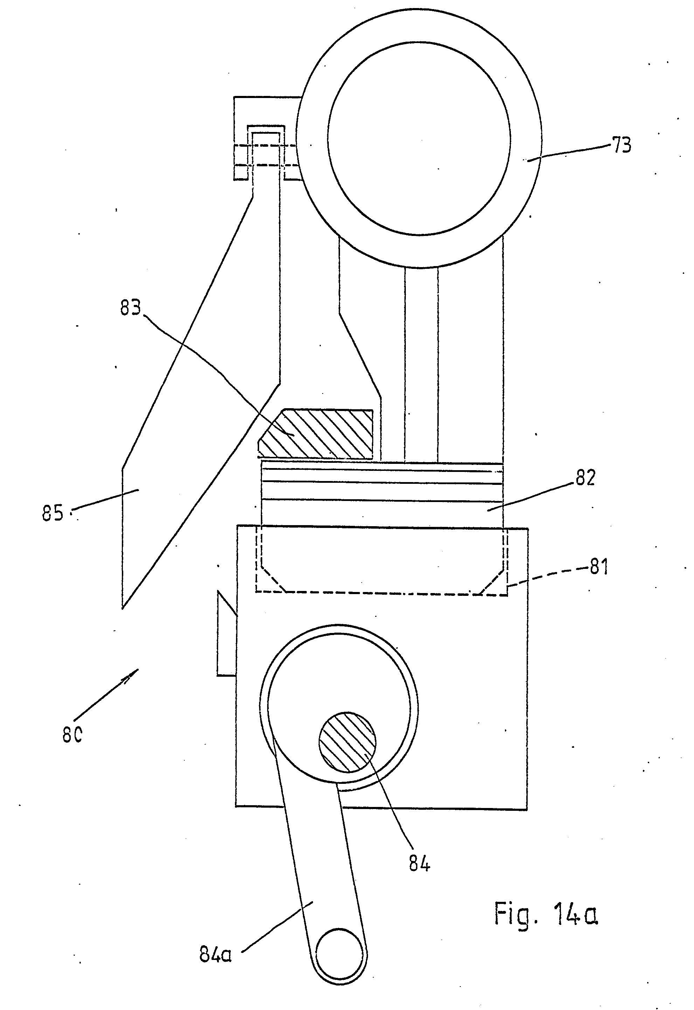

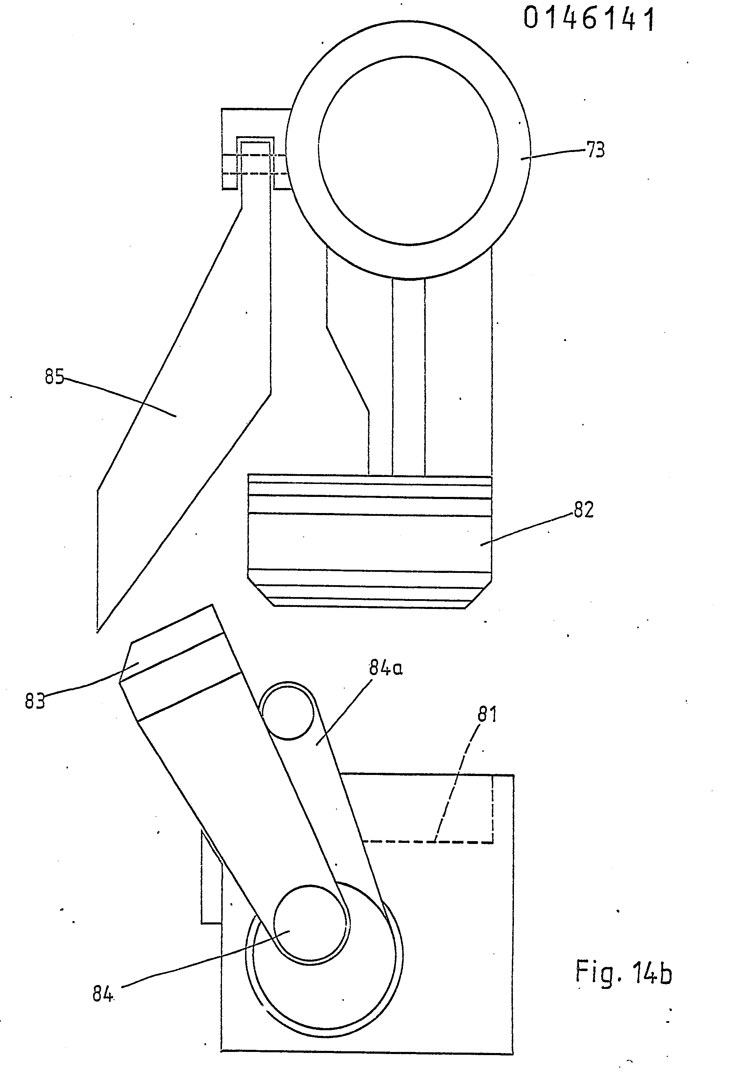

Fig. 14               einen bei einer Rahmenkonstruktion
                      nach der Erfindung für Zweiseiten-oder Dreiseitenkippbetrieb verwendbaren Schnellverriegelungsmechanismus in Seitenansicht,

Fig. 14a      den Schnellverriegelungsmechanismus
nach Fig. 14 in Stirnansicht im
geschlossenen Zustand,

Fig. 14b      den Schnellverriegelungsmechanismus
nach Fig. 14 in Stirnansicht im
geöffneten Zustand,

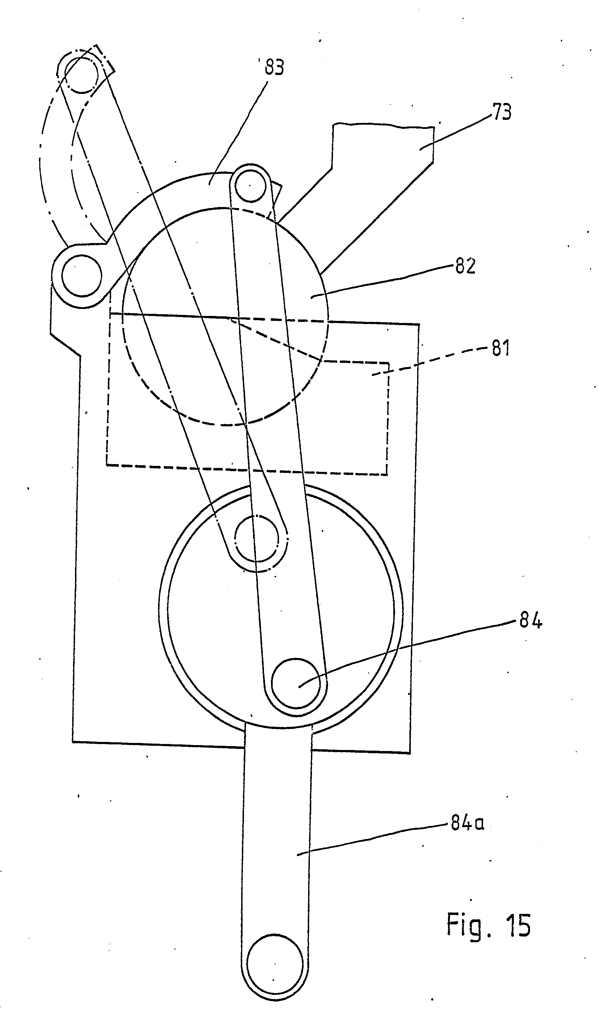

Fig. 15       eine abgewandelte Ausführungsform
des Schnellverriegelungsmechanismus,

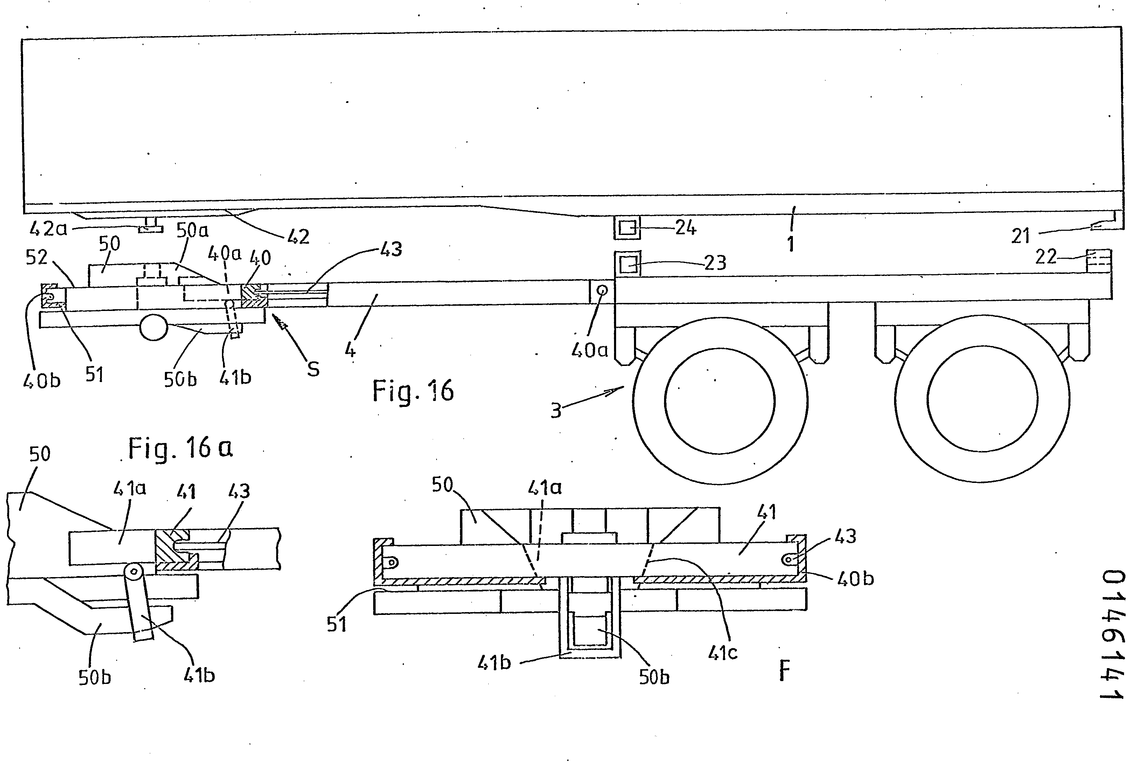

Fig. 16       eine Rahmenkonstruktion nach der
Erfindung für Sattelauflieger mit
Hinterachslenkung,

Fig. 16a      eine Sicherungsanordnung (Einzelheit S) der Konstruktion nach
Fig. 16 in vergrößerter Seitenansicht

Fig. 16b      die Sicherungsanordnung in Rückansicht,

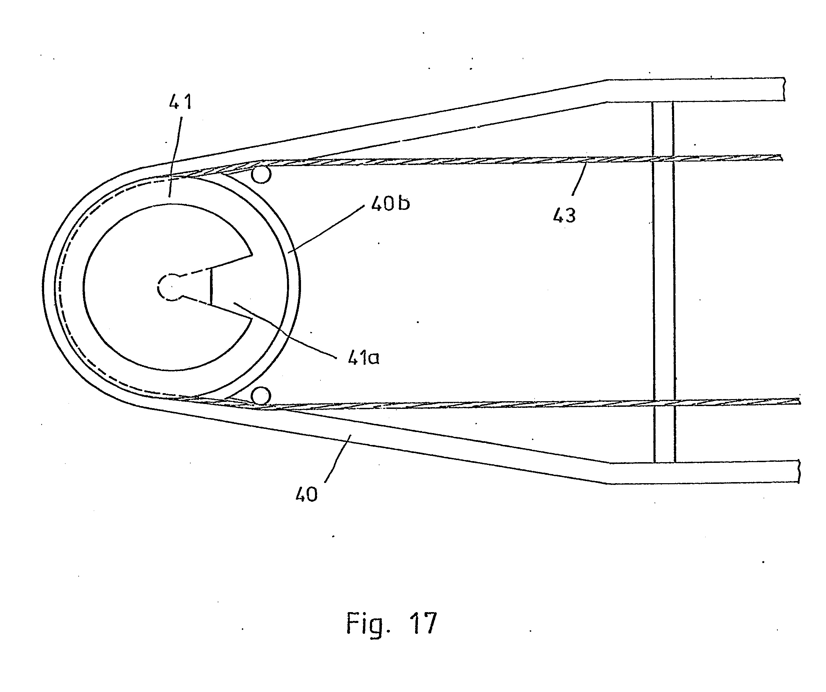

Fig. 17       der Deichselrahmen der Konstruktion
nach Fig. 7 in Draufsicht,

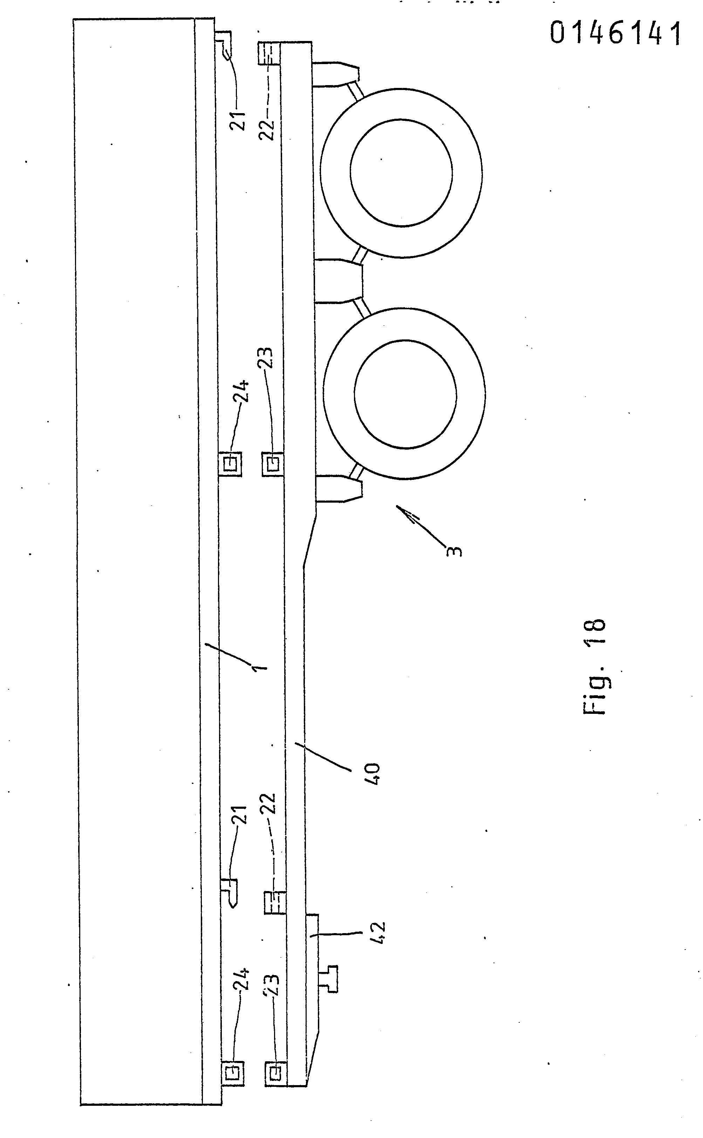

Fig. 18       eine Rahmenkonstruktion ähnlich
Fig. 7 für Sattelauflieger ohne
Hinterachslenkung,

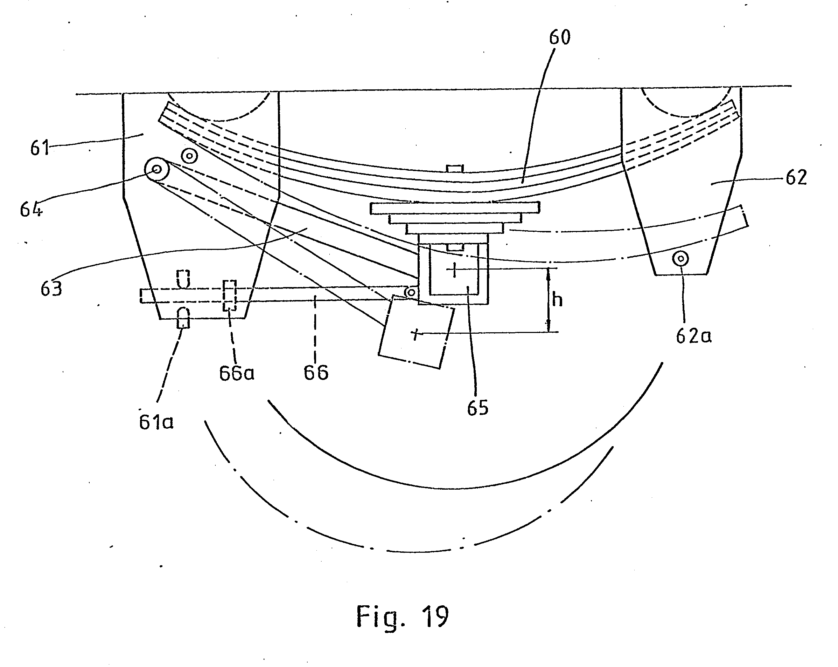

Fig. 19       ein als Liftvorrichtung ausgebildetes
Blattfederaggregat, und

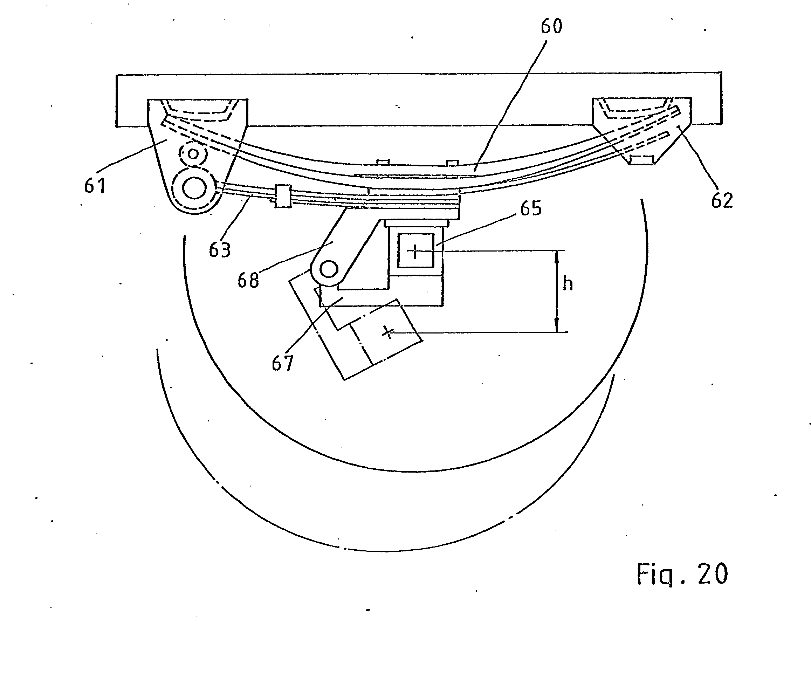

Fig. 20        eine andere Ausführungsform eines als Liftvorrichtung ausgebildeten Blattfederaggregats.

Alle Zeichnungen sind sehr schematisch gehalten und zeigen nur den grundsätzlichen Aufbau der erfindungsgemäßen Rahmenkonstruktion, ohne auf konstruktive Einzelheiten einzugehen, die an sich bekannt sind oder deren Durchbildung dem Fachkonstrukteur keine Schwierigkeiten bereitet. Ebenso sind die Zeichnungen nicht maßstäblich.

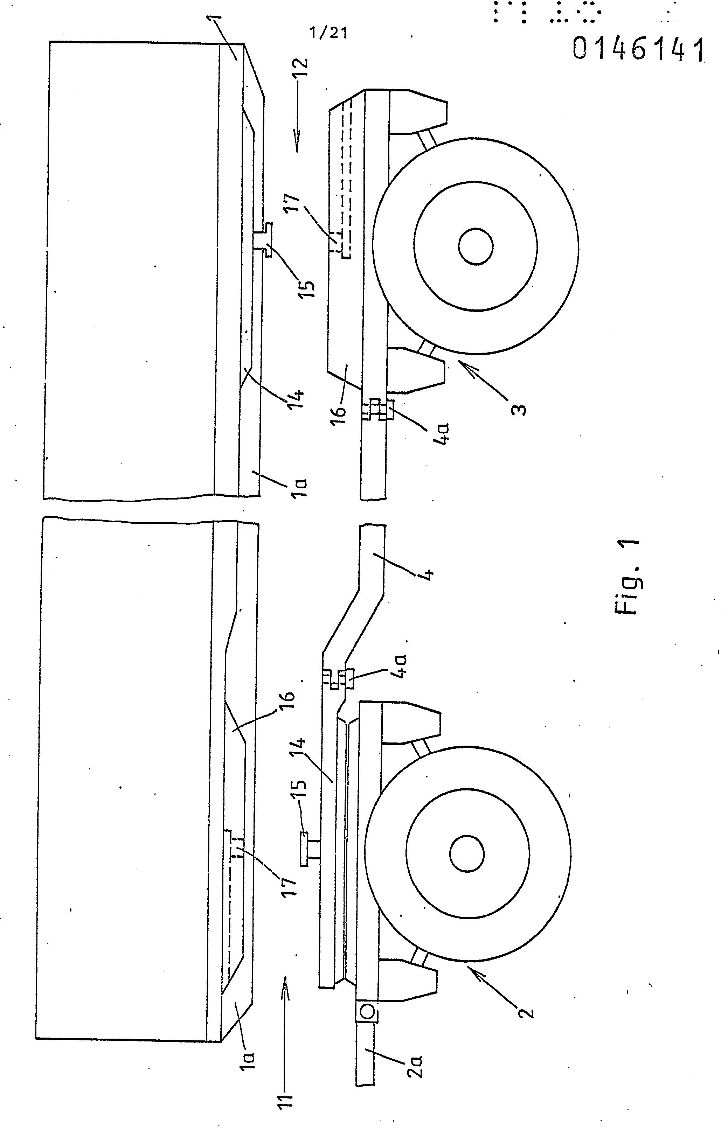

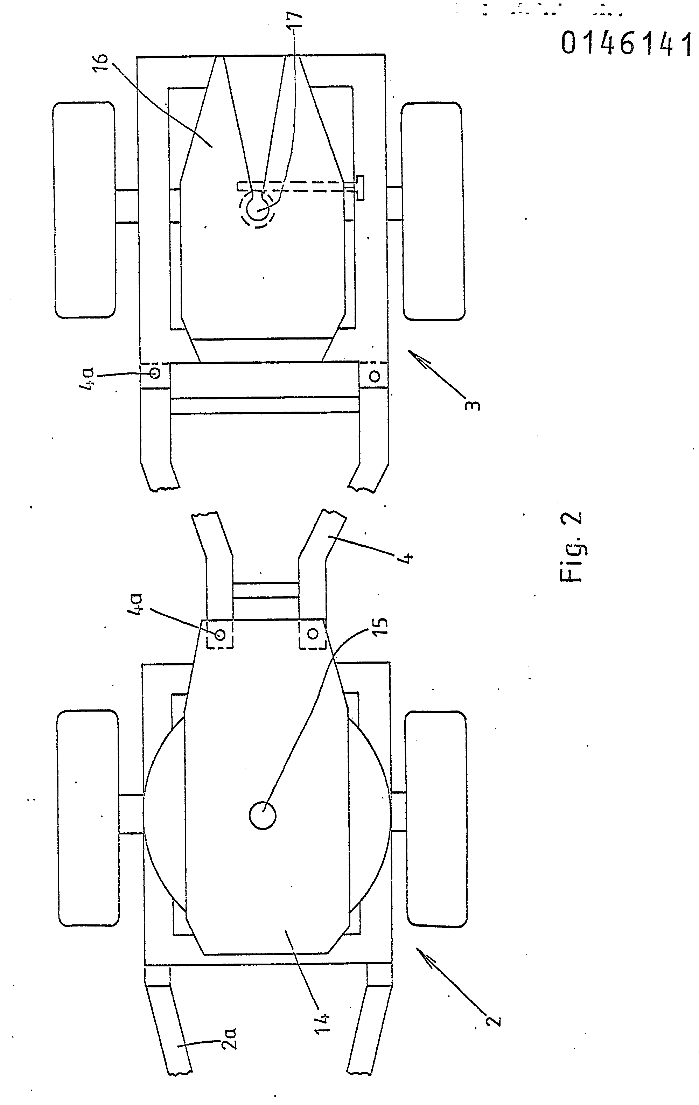

Die in Fig. 1 im Aufriß dargestellte Rahmenkonstruktion besteht aus einem Brückenrahmen 1, einem Vorderachsgestell 2 mit einer Anhängerdeichsel 2a und einem Hinterachsgestell 3. Die beiden Achsgestelle 2 und 3 sind durch einen leichten Verbindungsrahmen 4 miteinander verbunden, der mittels Bolzen 4a lösbar mit dem Vorderachsgestell 2 und dem Bolzen 4a lösbar mit dem Vorderachsgestell 2 und dem Hinterachsgestell 3 verbunden ist. Die beiden Achsgestelle 2 und 3 und der Verbindungsrahmen 4 sind in Fig. 2 in Draufsicht dargestellt. Der Verbindungsrahmen kann (nicht dargestellt) außerdem, beispielsweise durch teleskopartige Ausbildung, längenverstellbar sein.

Das Vorderachsgestell ist mittels einer Schnellkupplung 11 mit dem Brückenrahmen 1 verbindbar, während zur Verbindung des Hinterachsgestells 3 mit dem Brückenrahmen eine Schnellkupplung 12 dient.

Diese beiden Schnellkupplungen 11 und 12 sind jeweils sattelkupplungsartig ausgebildet und bestehen aus einer Sattelplatte 14 mit Königszapfen 15 einerseits und einer Kupplungsplatte 16 mit Königszapfen-Aufnahmeöffnung 17 andererseits. Beider Vorderachsgestell-Schnellkupplung 11 ist die Sattelplatte 14 mit dem Königszapfen 15 am Achsgestell angeordnet, während die Kupplungsplatte 16 mit der Königszapfen-Aufnahmeöffnung 17 am Brückenrahmen angeordnet ist. Bei der hinteren Schnellkupplung 12 ist

0146141

dagegen die Sattelplatte 14 mit dem Königszapfen 15 am
Brückenrahmen und die Kupplungsplatte 16 mit der Königszapfen-Aufnahmeöffnung 17 am Achsgestell angeordnet. Die
am Vorderachsgestell invertierte Kupplungsanordnung
ermöglicht bei gleichem Höhenniveau der beiden Schnellkupplungen ein freien Hindurchfahren des Hinterachsgestells
unter der Kupplungsplatte 16 der vorderen Schnellkupplung.

Wesentlich ist, daß Sattelplatte und Kupplungsplatte
jeder Schnellkupplung drehfest aufeinander liegen, was z.B.
durch längsverlaufende, miteinander zusammenwirkende
Nut- und Federprofile (nicht dargestellt) an Sattelplatte
und Kupplungsplatte oder durch Führung der Seitenkanten
der jeweils achsgestellseitigen Platte zwischen den
Längsholmen 1a des Brückenrahmens erreicht werden kann.
Außerdem kann das Ein- und Ausfahren der Achsgestelle
unter dem Brückenrahmen dadurch erleichtert werden, daß
die Längsholme 1a des Brückenrahmens als Führung für
die Seitenkanten der am Vorderachsgestell angeordneten
Sattelplatte 14 und der am Hinterachsgestell angeordneten
Kupplungsplatte 16 ausgebildet werden.

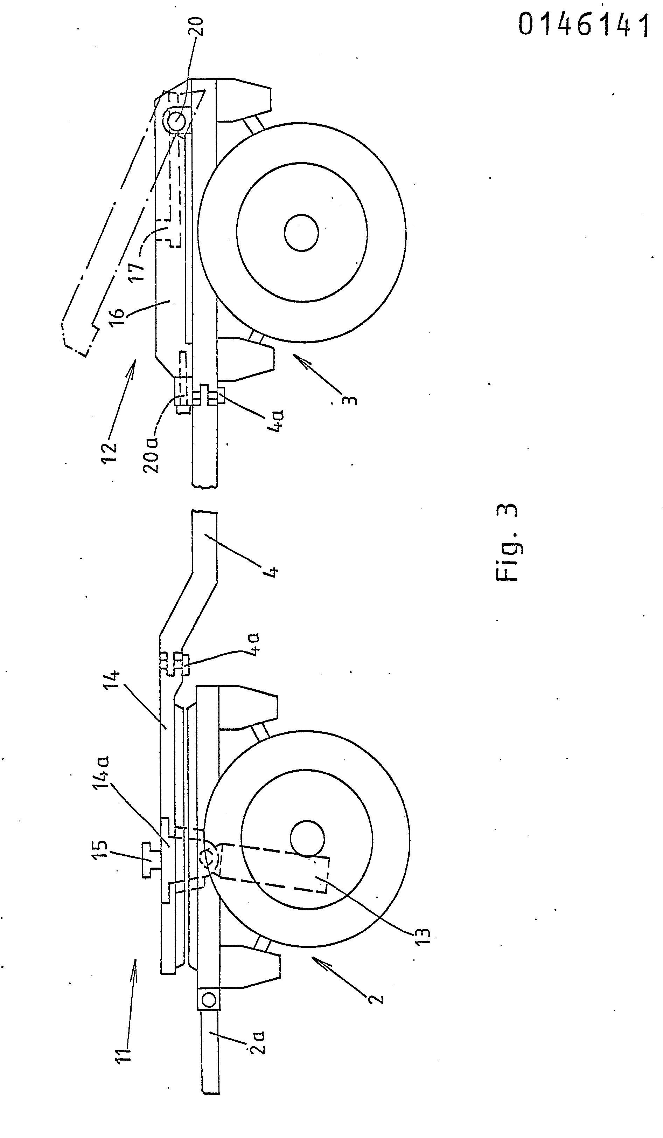

Fig. 3 zeigt eine als Hinterkipprahmen abgewandelte
Rahmenkonstruktion der eben beschriebenen Art. Hierbei
ist die Kupplungsplatte 16 der Schnellkupplungen 12 für das
Hinterachsgestell über eine Scharnierverbindung 20 kippbar
am Hinterachsgestell angelenkt. Im abgekippten Zustand
wird die Kupplungsplatte 16 mittels einer Verriegelung 20a
mit dem Achsgestell 3 verriegelt. Im Vorderachsgestell
ist eine Kipp-Presse 13 eingebaut, die auf einen den
Königszapfen 15 tragenden ausfahrbaren Teil 14a der
Sattelplatte 14 der Schnellkupplung 11 für das Vorderachsgestell wirkt. Die Pressenverriegelung ist der Übersichtlichkeit halber nicht dargestellt.

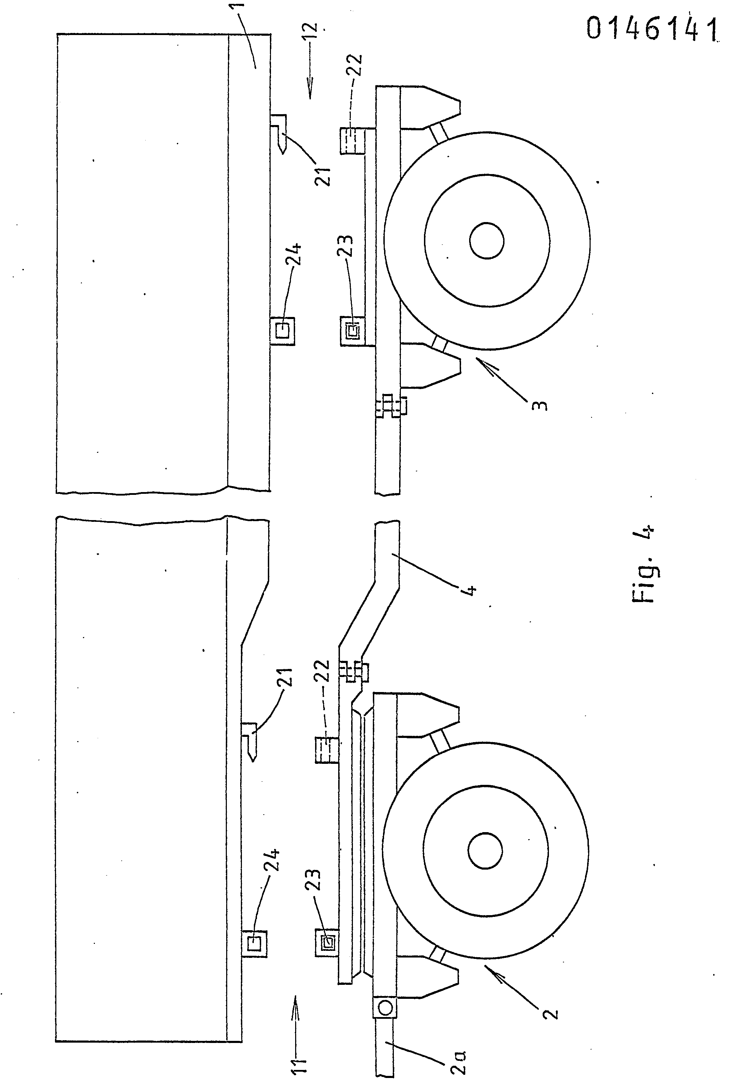

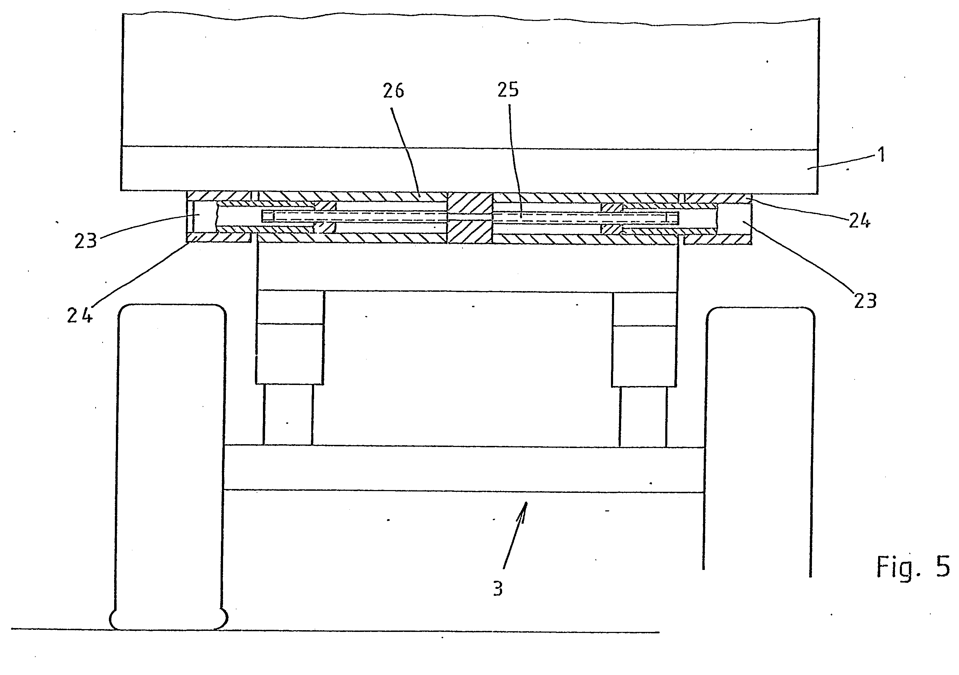

Bei dem in den Fig. 4 und 5 dargestellten Ausführungsbeispiel sind die beiden Schnellkupplungen 11 und 12
jeweils durch eine Gruppe von Zapfenverbindungen gebildet.

Jede Schnellkupplung weist zwei beiderseits der Fahrzeuglängsachse am Brückenrahmen angeordnete, horizontal in
Fahrzeuglängsrichtung verlaufende Zapfen 21 auf, die in
eine entsprechende Zapfenaufnahmeöffnung 22 an dem
betreffenden Achsgestell eingreifen. Zum leichteren Einführen sind die Zapfen 21 an ihren vorderen Enden abgeschrägt.

Weiter weist jede Schnellkupplung zwei beiderseits
der Fahrzeuglängsachse am Brückenrahmen angeordnete,
horizontal in Querrichtung verlaufende Zapfen 23 auf, die
in ihrer Verriegelungstellung in Zapfenaufnahmeöffnungen 24
an dem betreffenden Achsgestell eingreifen.

Während die Längszapfen 21 starr am Brückenrahmen
angeordnet sind, sind die Querzapfen 23 zwischen einer
Entriegelungsstellung und einer Verriegelungsstellung
aus- und einfahrbar. Dazu sind die beiden Querzapfen 23,
die beispielsweise ein Vierkantprofil haben und in einem
Vierkantrohr oder dgl. verschiebbar geführt sind, über
eine gemeinsame Gewindespindel 25 mit einem Rechts- und
einem Linksgewinde miteinander gekuppelt, so daß sich
beide Zapfen 23 bei Drehung der Spindel gleichzeitig auswärts oder einwärts verschieben. Die Querzapfen 23 sind
in einem Vierkantrohr 26 geführt und selbst als Vierkantrohre ausgebildet, und die Spindel 25 kann an ihren Enden
einen Außensechskant oder dgl. zum Ansetzen eines Werkzeugs zum Drehen aufweisen. Selbstverständlich können auch
andere Möglichkeiten für die Ver- und Entriegelung der
Querzapfen 23 Anwendung finden.

Durch die Kombination zweier Längszapfenverbindungen
und zweier Querzapfenverbindungen je Schnellkupplung ist
eine schnell herstellbare und schnell lösbare, sichere und
drehfeste Kupplung zwischen Achsgestell und Brückenrahmen
gegeben.

- 18 -

0146141

Wie aus Fig. 4 ersichtlich ist, sind die Zapfenverbindungen der vorderen Schnellkupplung 11 auf einem höheren Niveau als diejenigen der hinteren Schnellkupplung 12 angeordnet, so daß das Hinterachsgestell 3 ohne weiteres unter den brückenrahmenseitigen Teilen der Zapfenverbindungen der vorderen Schnellkupplung 11 hindurchfahrbar ist.

Fig. 6 zeigt in Stirnansicht von hinten ein Achsgestell für eine nach der Erfindung ausgebildete Zweiseiten- oder Dreiseitenkipprahmenkonstruktion in seitwärts gekipptem Zustand. Die Schnellkupplung 12 zur Verbindung dieses Achsgestells mit dem Brückenrahmen entspricht derjenigen nach den Fig. 4 und 5.

Auf dem eigentlichen Achsgestell 3 liegt ein Hilfsrahmen 31 auf, auf welchen eine in der Breitenmitte des Achsgestells eingebaute Kipp-Presse 13 wirkt. Diesem Hilfsrahmen 31, der die achsgestellseitigen Zapfenverbindungselemente der Schnellkupplung 12 trägt, ist beiderseits des Achsgestells 3 eine Kippgelenkanordnung 32 zugeordnet. Diese Kippgelenkanordnung 32 auf jeder Achsgestellseite besteht aus einem Zwischenkörper 33, der über ein Seitenkippscharniergelenk 34 mit parallel zur Fahrzeuglängsrichtung verlaufender Scharnierachse und lösbarem Scharnierbolzen lösbar mit dem Hilfsrahmen 31 verbindbar und über ein dazu rechtwinklig verlaufendes Hinterkippscharniergelenk 35 mit quer zur Fahrzeuglängsrichtung verlaufender Scharnierachse und ständig eingestecktem Scharnierbolzen mit dem Achsgestell verbunden ist. Im abgekippten Zustand ist der Hilfsrahmen 31 in seiner auf dem Achsgestell aufliegenden Stellung durch die angedeutete Kipp-Pressenverriegelung 13a gesichert.

In der Darstellung nach Fig. 6 ist der Hilfsrahmen 31 nach rechts hochgekippt, wozu der Scharnierbolzen des

0146141

linken Seitenkippscharniergelenks 34 herausgezogen sowie selbstverständlich die Pressenverriegelung 13a gelöst ist.

Für Hinterkippbetrieb bleiben die Scharnierbolzen beider Seitenkippscharniergelenke 34 eingesteckt und nur die Pressenverriegelung 13a wird gelöst. Freilich können auch andere Verriegelungen unabhängig von der Kipp-Presse zur Sicherung des abgekippten Hilfsrahmens 31 verwendet werden.

In Fig. 7 ist im Aufriß eine weitere Ausführungsform einer Rahmenkonstruktion nach der Erfindung mit Zapfenverbindungen als Schnellkupplungen dargestellt, wobei jedem Achsgestell zwei beiderseits der Fahrzeugmitte angeordnete Zapfenverbindungen 70 zugeordnet sind, und wobei die Zapfenachsen aller Zapfenverbindungen parallel zur Fahrzeuglängsrichtung verlaufen.

Eine dieser Zapfenverbindungen 70 ist in Fig. 8a und 8b in größerem Maßstab mehr im einzelnem dargestellt. Der Zapfen 71 dieser Zapfenverbindung ist als Doppelzapfen mit zwei konischen Zapfenenden 71a ausgebildet und in seiner Mitte über einen Verbindungsteg 72 mit dem Brückenrahmen 1 verbunden. Hinterhalb des konischen Abschnitts jedes Zapfenendes 71a ist eine Umfangsnut 71b eingestochen.

Die Zapfenaufnahmeöffnung wird durch ein am betreffenden Achsgestell befestigtes Rohr 73 gebildet, das in seinem hinteren Teil einen Längsschlitz 73a zum Einführen des Verbindungsstegs 72 aufweist, wie aus Fig. 8a ersichtlich ist. Das Rohr und der Zapfen haben jeweils kreisrunde Querschnittsform, wie aus Fig. 8b hervorgeht, und der Längsschlitz 73a kann in dem den Verbindungssteg 72 bei voll eingeschobenem Zapfen aufnehmenden Bereich in Umfangsrichtung derart erweitert sein, daß der Zapfen mit dem Verbindungssteg innerhalb des Rohres 73 um einen bestimmten Winkel drehbar und folglich als Seitenkippscharniergelenk verwendbar ist.

Die Ausbildung des Zapfens 71 als Doppelzapfen mit beiderseits konischem Zapfenende 71a ermöglicht ein wahlweises Heranfahren der Achsgestelle mit dem Rohr 73 vom einen oder anderen Zapfenende her, so daß also beim Aufpritschen die vorne-hinten-Richtung des Brückenaufbaus vertauscht werden kann.

Zur Sicherung der Schnellkupplungsverbindungen zwischen den Achsgestellen und dem Brückenrahmen in Fahrzeuglängsrichtung weisen die Zapfenverbindungen 70 jeweils eine Arretierungsvorrichtung zur Sicherung des in der Zapfenaufnahmeöffnung aufgenommenen Zapfens 71 gegen relative Axialverschiebung in dem Rohr 73 auf. Diese Arretierungsvorrichtung 74 weist ein Sperrelement 74a in Form einer Sperrplatte auf, die an einer am vorderen Ende des Rohres 73 angeordneten Haltenase 74b schwenkbar angelenkt ist und in die jeweils vordere Nut 71b des Zapfens 71 einrastet. Beim Einführen des Zapfens in das Rohr, was beim Aufpritschen dadurch geschieht, daß das am Achsgestell befestigte Rohr beim Heranfahren des Achsgestells über den am Brückenrahmen befestigen Zapfen gleitet, wird die Sperrplatte 74a durch das jeweils vordere, konische Zapfenende 71a automatisch in ihre Öffnungs- stellung geschwenkt und rastet dann bei vollständig in dem Rohr 73 befindlichem Zapfen 71 auch selbsttätig in die Umfangsnut 71b ein. Dieser Einrastvorgang wird durch eine Feder 74c unterstützt, welche die Sperrplatte in ihre Schließstellung vorspannt. Ein Anschlag 74d definiert die Schließstellung der Sperrplatte 71a auch dann, wenn der Zapfen 71 sich nicht in dem Rohr 73 befindet.

0146141

Ein unbeabsichtigtes Öffnen der Sperrplatte 74a und somit eine ungewollte Entriegelung der Zapfenverbindung 70 verhindert eine Sicherungsvorrichtung 75, die einen Sicherungsbolzen 75a aufweist, der an einem am Brückenrahmen gehalterten Halteelement 75b parallel zur Zapfenachse längsverschieblich geführt und mittels einer Feder 75c nach vorne in seine Sicherungsstellung vorgespannt ist. Wenn beim Schließen der Zapfenverbindung das Rohr 73 über den Zapfen 71 gleitet, wird in der Endphase dieser Bewegung, wie schon erwähnt, die am Rohr gehalterte Sperrplatte 74a durch den konischen Zapfenendteil 71a selbsttätig in ihre Öffnungsstellung angehoben und drückt in dieser angehobenen Stellung in der letzten Phase des Ineinanderschiebens von Zapfen und Rohr den Sicherungsbolzen 75a in seine Lösestellung zurück, und nach dem Einrasten der Sperrplatte 74a in die Nut 71b des Zapfens drückt die Feder 75c den Sicherungsbolzen 75a automatisch wieder in seine Sicherungsstellung vor, in welcher er die Sperrplatte gegen unbeabsichtigtes Öffnen sichert.

Zum Lösen der Zapfenverbindung 70 ist es lediglich erforderlich, den Sicherungsbolzen 75a entgegen der Vorspannkraft der Feder 75c in seine Lösestellung zurückzuziehen und sodann die Sperrplatte 74a in ihre Lösestellung anzuheben. Läßt man dann den Sicherungsbolzen 75a wieder los, hält der durch die Feder 75c gegen die Sperrplatte 74 gespannte Sicherungsbolzen die Sperrplatte durch den so hergestellten Reibschluß in ihrer Offenstellung, so daß nun durch Wegfahren des Achsgestells das Rohr 73 vom Zapfen 71 heruntergezogen werden kann. Dies hat zur Folge, daß der Sicherungsbolzen 75a von selbst in seine Sicherungsstellung zurückkehrt und auch die Sperrplatte 74a selbsttätig in ihre Schließstellung zurückkehrt, so daß dann das nächste Wiederherstellen der Zapfenverbindung ohne jede manuelle Tätigkeit durch einfaches Aufgleiten des Rohres 73 auf den Zapfen 71 erfolgen kann.

Fig. 9 zeigt einen auf eine Rahmenkonstruktion nach Fig. 7 auflegbaren Kipprahmen 5 mit einer Mittelpresse in Draufsicht. Dieser Kipprahmen ermöglicht die jederzeitige einfache Umwandlung einer einfachen Rahmenkonstruktion für Kippbetrieb. Während in Fig. 9 nur der Kipprahmen allein dargestellt ist, zeigt Fig. 10 eine Rahmenkonstruktion nach Fig. 7 mit dem aufgelegten Kipprahmen in der Draufsicht und Fig. 11 einen Querschnitt in der Ebene XI-XI, aus welchem ersichtlich ist, wie die Rahmenprofile des die beiden Achsgestelle 3 und 4 miteinander verbindenden leichten Verbindungsrahmens 4 und des Kipprahmens 5 zueinander komplementär ausgebildet sind. Demgemäß ist bei dem dargestellten Ausführungsbeispiel der Verbindungsrahmen 4 aus C-Profilen aufgebaut, während der darauf aufliegende Kipprahmen 5 aus Z-Profilen besteht. Aufgrund dieser Profilgestaltung und der Rahmenform sitzt der auf dem Verbindungsrahmen aufgesetzte Kipprahmen in Längs- und Querrichtung unverschiebbar auf dem Verbindungsrahmen fest. Der Kipprahmen 5 ist biegesteif und überträgt die im Betrieb auftretenden Lasten ohne Biegebeanspruchung des Verbindungsrahmens direkt auf die beiden Achsgestelle.

In der Mitte des Kipprahmens 5 ist eine Kipp-Presse 13 mit kardanischer Aufhängung angeordnet, so daß sie sowohl als Seiten- als auch als Hinterkipp-Presse einsetzbar ist. Der Kippstempelkopf 51, der beispielsweise als Kugelkopf ausgebildet ist, greift in ein hohlkegeliges oder hohlpyramidenförmiges Zwischenstück 52 ein, welches die Hubkraft auf dem Brückenrahmen überträgt und über ein deichselartiges Zugglied 53 mit der Hinterkippachse 54 verbunden ist. Dadurch ist der Kippstempelkopf 51 beim Ausfahren der Kipp-Presse bezüglich der Hinterkippachse 54 zwangsgeführt und kann nicht nach vorne ausweichen. Für einen sicheren Kippbetrieb ist es also noch erforderlich, daß das Zwischenstück 52 in Längsrichtung an der Brückenrahmenunterseite geführt, also nur gegen seitliches Ausweichen gesichert ist, was das Unterfahren der Achsgestell-Kipprahmen-Baugruppe unter dem Brückenrahmen erleichtert. Die Hinterkippachse 54 ist mit den hinterachsgestellseitigen Elementen 73 der dem Hinterachsgestell zugeordneten beiden Zapfenverbindungen 70 verbunden und somit nach dem Aufpritschen am Brückenrahmen festgelegt. Im Seitenkippbetrieb wird also die Hinterkippachse 54 seitwärts mitgekippt, so daß auch in diesem Fall die Festlegung des Kippstempelkopfes 51 in Fahrzeuglängsrichtung erhalten bleibt.

In Fig. 10 sind auch am Verbindungsrahmen angeordnete Führungsrollen 6 ersichtlich, die zur Höhen- und Seitenführung der Achsgestell-Verbindungsrahmen-Baugruppe beim Ein- und Ausfahren unter dem Brückenrahmen dienen. Jede dieser Führungsrollen 6, die mit den Längsholmen des Brückenrahmens zusammenwirken, weist einen zylindrischen Rollenteil 6a, der mit der Unterseite des betreffenden Brückenrahmenlängsholm zusammenwirkt und die Höhenführung übernimmt, und einen tellerförmigen Rollenteil 6b auf, der mit der Seitenfläche des betreffenden Längsholms zusammen der Seitenführung dient. In Fig. 7 sind diese Führungsrollen in der Stirnansicht ihres tellerförmigen Rollenteils 6b ebenfalls erkennbar.

Fig. 12 zeigt eine andere Ausführungsform eines auflegbaren Kipprahmens 5 mit zwei Hubstempeln 55 in Draufsicht. Auch dieser Kipprahmen ist sowohl für Seiten- als auch für Hinterkippbetrieb einsetzbar.

Wie aus der Seitenansicht nach Fig. 13 hervorgeht, sind die beiden Hubstempel 55 jeweils über ein Kuppelglied gelenkig mit dem Ende eines Kurbelarms 56 verbunden,

- 24 -

0146141

wobei das Kuppelglied des hinteren Hubstempels eine Kuppelstange 57 ist, während das Kuppelglied des vorderen Hubstempels als Hinterkipp-Presse 13H ausgebildet ist, deren
Zylinder am Kurbelarm 56 und deren Kolbenstange am Hubstempel 55 angelenkt ist. Die Geometrie der Anordnung ist
so gewählt, daß die Anlenkstelle 56a zwischen dem Kurbelarm 56 und dem jeweiligen Kuppelglied unterhalb der Anlenkachse 56b des Kurbelarms am Kipprahmen 5 und bezüglich
dieser Anlenkachse zur Längenmitte des Kipprahmens hin versetzt liegt. Jeder Kurbelarm 56 weist außerdem einen nach
oben weisenden Ansatz 56c auf, und diese Ansätze der beiden
Kurbelarme sind durch eine liegend dazwischen verlaufende Seitenkipp-Presse 13S miteinander verbunden. Der
Zylinder dieser Seitenkipp-Presse und ihre Kolbenstange
sind jeweils über ein Gabelstück 58 an dem betreffenden
Kurbelarmansatz 56c angelenkt, wobei die Geometrie der Anordnung so ausgelegt ist, daß die Anlenkstelle 56d des
Gabelstücks 58 am betreffenden Kurbelarmansatz oberhalb
der Anlenkachse 56b des betreffenden Kurbelarms liegt.

Wie ohne weiteres ersichtlich ist, erfolgt bei der
Betätigung der Seitenkipp-Presse 13S durch das Auseinanderdrücken der Kurbelarmansätze 56c eine gleichzeitige,
aber gegensinnige Schwenkung der beiden Kurbelarme 56 um
ihre Anlenkachsen 56b herum, wodurch nach dem Schubkurbelprinzip ein gleichzeitiges Anheben der beiden Hubstempel 55
erfolgt. Der dabei erreichte Hubstempelhub reicht zum Seitenkippen aus. Zum Hinterkippen wird zusätzlich die Hinterkipp-Presse 13H ausgefahren, so daß der vordere Hubstempel 55
weiter angehoben wird als der hintere Hubstempel 55. Die
aus der Seitenansicht nach Fig. 13 ersichtlich Schräglage der Kuppelstange 57 und der Hinterkipp-Presse 13H
bringen eine Verringerung der Bauhöhe der Anordnung.

Für Zweiseiten- oder Dreiseitenkippbetrieb ist es notwendig, den Brückenrahmen zum Kippen um eine an der einen oder anderen Fahrzeugseite gelegene Seitenkippachse an der jeweils anderen Fahrzeugseite bzw. zum Kippen um die Hinterkippachse im vorderen Bereich zu entriegeln. Zu diesem Zweck ist in den Fig. 14, 14a und 14b ein Schnellverriegelungsmechanismus dargestellt, der ein schnelles Lösen der jeweiligen Kippverriegelung und im Zuge des Abkippens jeweils ein automatisches Wiederverriegeln ermöglicht. Der in Fig. 14 in der Seitenansicht dargestellte Schnellverriegelungsmechanismus 80 weist eine am betreffenden Achsgestell befestigte Lagerschale 81, einen in dieser Lagerschale ruhenden, am achsgestellseitigen Schnellkupplungselement befestigten Lagerkörper 82 und einen in seiner Schließstellung den Lagerkörper übergreifenden Verschlußbügel 83 auf. Bei dem achsgestellseitigen Schnellkupplungselement handelt es sich bei dem dargestellten Ausführungsbeispiel um das Rohr 73 einer als Zapfenverbindung ausgebildeten Schnellkupplung nach den Fig. 8a und 8b. Die Fig. 14a und 14b zeigen den Mechanismus in der Stirnansicht im geschlossenen bzw. im geöffneten Zustand.

Der Verschlußbügel 83 ist mittels einer Exzenterkurbel 84 mit einem Handgriff 84a zwischen seiner Schließstellung (Fig. 14a) und seiner Offenstellung (Fig. 14b) bewegbar. Ein beispielsweise an dem Rohr 73 befestigter Mitnehmer ist so angeordnet und ausgelegt, daß er beim Abkippen während der letzten Phase der Einführungsbewegung des Lagerkörpers 82 in die Lagerschale 81 am Verschlußbügel 83 angreift, wie dies aus Fig. 14b erkennbar ist, und diesen in seine Schließstellung schwenkt und in dieser Schließstellung auch gegen unbeabsichtiges Öffnen sichert. Der Mitnehmer ist dabei selbstverständlich seinerseits beweglich angeordnet, damit er zum Öffnen des

Schnellverriegelungsmechanismus in eine das Öffnen des Verschlußbügels mittels des Handgriffes 84a ermöglichende Freigabestellung bewegt werden kann.

Da es beim Kippen infolge nicht horizontaler Fahrzeuglage in unebenen Gelände oder infolge lastbedingter Verwindungen von Rahmenteilen vorkommen kann, daß beim Abkippen der Lagerkörper zunächst nicht ganz exakt in der Lagerschale sitzt, ist die Exzenterkurbel 84 des Verschlußbügels 83 in ihrer Schließstellung vorzugsweise durch eine Vorspannkraft baufschlagt, welche den Verschlußbügel weiter in Schließrichtung vorspannt, so daß er, wenn durch nachfolgende Fahrzeugerschütterungen im Fahrbetrieb der Lagerkörper vollständig in die Lagerschale hineingleitet, der Verschlußbügel ganz in seine Schließstellung weiterbewegt werden kann. Zur Erzeugung dieser Vorspannkraft kann entweder ein am Handgriff 84a angeordnetes Gewicht oder eine nicht dargestellte Feder dienen, wobei aber die Anordnung so getroffen sein muß, daß diese Vorspannkraft in der Offenstellung der Exzenterkurbel nicht wirksam ist. Ein auf die Exzenterkurbel 84 wirkendes Zahnrichtgesperre 86 ermöglicht zwar ein vollständigeres Schließen des Verschlußbügels 83, wirkt aber einer unbeabsichtigten Öffnungsbewegung des Verschlußbügels entgegen.

Beim dargestellen Ausführungsbeispiel ist der Lagerkörper als zylindrischer, in einer etwa halbzylindrischen Lagerschale ruhender Lagerkörper ausgebildet, so daß er im Zusammenwirken mit der Lagerschale 81 gleichzeitig als Hinterkippscharnierlager verwendet werden kann. Ein Seitenkippbetrieb ist dann durch Ausbildung der Zapfenverbindungen 70 als Seitenkippscharnierlager möglich.

Fig. 15 zeigt eine Abwandlung des eben beschriebenen Schnellverriegelungsmechanismus derart, daß die Lagerschale 81 etwa halbkugelförmig und der Lagerkörper 82 kugelförmig ausgebildet ist. Der Verschlußbügel 83 ist entsprechend ausgebildet. Diese Variation ermöglicht eine Verwendung des Schnellverriegelungsmechanismus als kombiniertes Seiten- und Hinterkippdrehlager. Die Geometrie der Anordnung ist dabei so gewählt, daß der kugelige Lagerkörper 83 mit dem davon etwa seitwärts wegragenden, ihn mit dem achsgestellseitigen Schnellkupplungselement verbindenden Verbindungselement 83a sowohl um eine zur Fahrzeuglängsrichtung parallele Achse (Seitenkippachse) als auch um eine zur Fahrzeuglängsrichtung quer verlaufende Achse (Hinterkippachse) mit jeweils ausreichendem Drehwinkel drehbar ist, während der Verschlußbügel 83 in seiner Schließstellung in Lagerkörper 82 gegen ein Abheben aus der Lagerschale 81 sichert.

Fig. 16 zeigt im Aufriß eine Rahmenkonstruktion für einen Sattelauflieger mit Hinterachslenkung an einem mehrachsigen, nämlich beispielsweise zweiachsigen Hinterachsgestell. Mit dem Hinterachsgestell ist ein Deichselrahmen 40 über Scharniergelenkverbindungen 40a heb- und senkbar angelenkt. Der in Fig. 17 in Draufsicht sichtbare Deichselrahmen 40 weist an seinem vorderen Ende eine Brille 40b auf, die einen Drehkranz 41 mit einem daran starr angeordneten Keil 41a trägt. Der Brückenrahmen ist, wie bei den zuvor beschriebenen Ausführungsbeispielen, über eine Schnellkupplung mit dem Hinterachsgestell 3 verbindbar und trägt an seinem vorderen Ende eine Sattelplatte 42 mit Königzapfen 42a, die mit der Kupplungsplatte 50 der Sattelzugmaschine zusammenwirkt. Die Brille 40b gleitet beim Aufsatteln über die Kupplungsplatte 50 der Sattelzugmaschine und wird unterhalb der Kupplungsplatte von einer ringförmigen Brillenaufnahme 51 aufgenommen. Der Keil 41a greift dann satt in das Königszapfen-Einführungsmaul der Kupplungsplatte 50, so daß der Drehkranz 41, wenn die Sattelzugmaschine eine Abknickbewegung mit Bezug auf den Sattelauflieger ausführt, relativ zum Deichselrahmen 40 mitgedreht wird. Über ein Lenkseil 43 ist der Drehkranz mit der Lenkachse oder den Lenkachsen des Hinterachsgestells verbunden und bewirkt so deren Lenkung in Abhängigkeit der jeweiligen Abknickung zwischen Zugmaschine und Sattelauflieger.

Die Anordnung ermöglicht das wahlweise Auf- und Abpritschen des Brückenrahmens oder das An- und Abhängen des gesamten Sattelaufliegers samt Hinterachsgestell 3 und Deichselrahmen 40. Dabei ist die Anordnung selbstverständlich so getroffen, daß beim Aufsatteln keine Kollision zwischen dem Königszapfen 42a der Sattelplatte 42 und dem Keil 41a des Drehkranzes 41 auftritt. Wenn die Sattelzugmaschine zum Aufsatteln rückwärts heranfährt, gleitet zunächst die Brille 40b des etwas angehobenen Deichselrahmens 40 mit der Brille über den oberen, hinten abgeschrägten Teil der Kupplungsplatte 50 und fällt dann zunächst auf den Absatz 52. In dieser Position kann der Königszapfen 42a vorderhalb des Keiles 41a in das Einführungmaul 50a der Kupplungsplatte 50 eintreten, und nach vollständigem Einführen des Königszapfens in seine Aufnahmeöffnung fällt die Brille 40b mit dem Drehkranz 41 in die ringförmige Brillenaufnahme 51. Das konische Einführungmaul 50a erstreckt sich vertikal so weit nach unten, daß in dieser letzteren Stellung der Brille der Keil 41a in einer gegenüber dem Königszapfen 42a tieferen Position in dem unteren Teil des Einführungsmaules 50a liegt.

An der Unterseite des Keiles 41a ist ein Spannbügel 41b angelenkt, der mit einer Sicherungsnase 50b an der Unterseite der Kupplungsplatte 50 zusammenwirkt. Dieser Einzelheiten sind aus den Ergänzungsfiguren 16a und 16b zu

Fig. 16 deutlicher ersichtlich. Der zum Aufsatteln hochgeklappte Sicherungsbügel 41b wird nach beendetem Aufsattelvorgang nach unten über die Sicherungsnase 50b geschwenkt. Der Spannbügel 41b ist durch eine nicht dargestellte, beispielsweise in seine Aufhängung eingebaute Torsionsfeder oder eine andere Feder in seine Spannstellung vorgespannt, derart, daß er im Zusammenwirken mit der schrägen Unterseite der Sicherungsnase 50b stets eine Spannkraft auf den Keil 41a ausübt, welche diesen fest in seine Aufnahmeöffnung in der Kupplungsplatte 50 hineindrückt. Aus Fig. 16b ist ersichtlich, daß die Seitenkanten 41c des Keiles 41a ebenso wie die damit zusammenwirkenden Flankenflächen der Aufnahmeöffnung in der Kupplungsplatte 50 nach unten konisch verlaufen, was einerseits beim Aufsatteln das Hineingleiten des Keiles in seine Aufnahmeöffnung erleichtert und andererseits einen stets straffen Sitz des Keiles in der Aufnahmeöffnung gewährleistet, unabhängig von Verschleißerscheinungen, die selbsttägig ausgeglichen werden. Zum Öffnen des Spannbügels 41b und gegebenenfalls zum Einleiten seines Schließvorgangs kann ein aus Gründen der Übersichtlichkeit der Zeichnungen ebenfalls nicht dargestellter Handhebel vorgesehen sein.

Anstelle der eben beschriebenen Sicherungsanordnung für den Keil 41a mit einem Spannbügel und einer Sicherungsnase an der Kupplungsplatte 50, wobei eine Zugkraft nach unten auf den Keil 41a ausgeübt wird, kann in analoger Weise auch eine Sicherungseinrichtung Anwendung finden, die sich an der Unterseite des Brückenrahmens abstützt und eine Druckkraft auf den Keil 41a ausübt, um diesen satt in seine Aufnahmeöffnung zu drängen.

In Abwandlung zu der dargestellten und eben beschriebenen Anordnung kann die Brille 40b selbst als

0146141

Sattelplatte mit Königszapfen gestaltet sein, die dann ihrerseits mittels einer Schnellkupplung mit dem Brückenrahmen verbindbar ist.

Fig. 18 zeigt ähnlich Fig. 16 im Aufriß eine Rahmenkonstruktion für einen Sattelauflieger, bei dem allerdings keine Hinterachslenkung vorgesehen ist. Hierbei trägt der Deichselrahmen 40 an seinem vorderen Ende eine Sattelplatte 42 mit Königszapfen, die in eine Kupplungsplatte einer Sattelzugmaschine einkuppelbar ist und über eine Schnellkupplung der schon beschriebenen Art mit dem vorderen Ende des Brückenrahmens kuppelbar ist. Der Deichselrahmen 40 ist hierbei allerdings starr, jedoch nach Bedarf lösbar mit dem Hinterachsgestell 3 verbunden.

Fig. 19 zeigt schließlich eine Möglichkeit der Ausbildung eines Blattfederaggregats als Liftvorrichtung zum Anheben des Brückenrahmens zum Abpritschen.

Das Blattfederaggregat besteht aus einem üblichen Blattfederpaket 60, einem vorderen Federbock 61, einem hinteren Federbock 62, und einem Achsführungshebel 63. Im Gegensatz zu üblichen Blattfederaggregaten ist das Federpaket 60 im hinteren Federbock 62 um eine beträchtliche Distanz bis zu einem Sicherheitsanschlag 62a nach unten auslenkbar. Außerdem ist der Achsführungshebel 63 im Gegensatz zu üblichen Blattfederaggregaten nicht horizontal angeordnet, sondern sein Anlenkungspunkt 64 am vorderen Federbock 61 ist bezüglich der am Federpaket 60 befestigten Achse 65 nach oben versetzt.

Wenn nun ein Anhänger, dessen Achsgestelle mit einem solchen Blattfederaggregat ausgestattet sind, bei angezogener Anhängerbremse etwas zurückgedreht wird, stellt sich zwischen der Anlenkstelle 64 des Achsführungshebels am vorderen Federbock 61 und der Achse 65 ein Drehmoment ein, welches die Anlenkstelle 64 und somit über den Federbock 61 das gesamte Achsgestell nach hinten und oben um die Achse 65 herum schwenkt, wobei das Federpaket 60 im hinteren Federbock 62 nach unten ausschwenkt. Diese Liftstellung ist in Fig. 19 strichpunktiert eingezeichnet. Damit ergibt sich also eine Anhebung des Achsgestells gegenüber der Achse 65 um eine Höhendifferenz h.

Zur Begrenzung der maximalen Auslenkung können alternativ zum Begrenzungsanschlag 62a oder zusätzlich hierzu auch Seilverbindungen zwischen Achsgestell und Achse oder eine gestrichelt eingezeichnete, an der Achse angelenkte und in einer Führung 61a im vorderen Federbock 61 geführte Stange 66 mit Begrenzungsanschlag 66a vorgesehen sein, wobei in diese Stange oder zwischen diese Stange und den Federbock 61 auch ein Dämpfer (aus Gründen der Übersichtlichkeit nicht gezeichnet) eingebaut sein kann.

Die in Fig. 20 dargestellte andere Ausführungsform eines als Liftvorrichtung ausgebildeten Blattfederaggregats arbeitet grundsätzlich in der gleichen Weise wie die Anordnung nach Fig. 19. Im Gegensatz zu der Anordnung nach Fig. 19 ist aber bei der Ausführungsform nach Fig. 20 das Blattfederpaket 60 nicht im hinteren Federbock 62 nach unten auslenkbar, sondern in der üblichen Weise ebenso wie im vorderen Federbock 61 im wesentlichen fest angeordnet. Auch der Achsführungshebel 63 verläuft bei der Ausführungsform nach Fig. 20 in üblicher Weise etwa horizontal von seiner Anlenkstelle am vorderen Federbock 61 zur Mitte des Blattfederpakets, ist aber nicht an der Achse befestigt, sondern am Blattfederpaket. Das Blattfederpaket 60 liegt lose auf der Achse 65 auf, an welcher ein nach vorne weisender Kurbelarm 67 befestigt ist. An diesem Kurbelarm 67 ist ein starr mit dem Blattfederpaket und dem Achsführungshebel verbundenes Verbindungsglied 68 angelenkt.

Wird nun der Anhänger bei angezogener Anhängerbremse etwas nach rückwärts gedrückt, rollt das Rad um einen kleinen Drehwinkel auf dem Boden nach hinten ab, wobei es wegen der angezogenen Bremse die Achse wiederum mitdreht, so daß der an der Achse 65 starr befestigte Kurbelarm 67 nach oben geschwenkt wird. Infolgedessen wird über das Verbindungsglied 68 das Blattfederpaket samt dem ganzen Achsgestell um eine Höhendifferenz h angehoben, ohne daß dabei eine Verwindung oder sonstige über die normale Belastung hinausgehende Beanspruchung des Blattfederpakets eintritt.

Auch bei dieser letzteren Ausführungsform kann natürlich ein geeignetes, der Einfachheit halber nicht dargestelltes Organ zur Begrenzung der Höhenauslenkung zwischen Achse und Federpaket und gegebenenfalls zur Dämpfung von etwa beim Überfahren von großen Schlaglöchern auftretenden Schlägen vorgesehen sein.

PATENTANWÄLTE
DIPL. ING. R. HOLZER
DIPL. ING. (FH) W. GALLO
PHILIPPINE-WELSER-STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉES PRÈS L'OFFICE
EURCPÉEN DES BREVETS
8900 AUGSBURG
TELEFON 0821/516475
TELEX 532202 PATOL D

Augsburg, den 18. Dezember 1984

Anw.Aktenz.: K.489 Europa
Anmelder   : Walter Krein, Bobingen

Patentansprüche

1. Rahmenkonstruktion für Fahrzeuganhänger einschließlich Sattelauflieger mit Wechselaufbau, insbesondere Kippanhänger, dadurch gekennzeichnet, daß der Brückenrahmen (1) des Aufbaus als eigensteifer Tragrahmen ausgebildet und mittels Schnellkupplungen (11, 12) lösbar mit einem Vorderachsgestell (2) oder einer Sattelplatte (42) und einem Hinterachsgestell (3) lösbar verbindbar ist, wobei das Vorderachsgestell (2) bzw. die Sattelplatte (42) und das Hinterachsgestell (3) vorzugsweise durch ein Gestänge oder einen nicht tragfähigen, leichten Verbindungsrahmen (4) miteinander verbindbar sind.

2. Rahmenkonstruktion nach Anspruch 1 für Sattelauflieger mit Hinterachslenkung, dadurch gekennzeichnet, daß die Sattelplatte (42) über einen Deichselrahmen (40) mit dem Hinterachsgestell (3) verbunden ist und der Deichselrahmen (40) mit einem mit der Sattelkupplung zusammenwirkenden Drehkranz (41) versehen ist, der einen damit starr verbundenen, in die Königszapfen-Einführungsöffnung der Kupplungsplatte der Zugmaschine eingreifenden Keil (41a) aufweist und über einen Seilzug (43) oder ein Lenkgestänge auf die Lenkachsen des Hinterachsgestells (3) wirkt.

3. Rahmenkonstruktion nach Anspruch 1 für Anhänger mit Hinterkipp- und/oder Seitenkippaufbau, dadurch gekennzeichnet, daß ein mit mindestens einer Kipp-Presse (13) ausgestatteter tragfähiger Kipprahmen (5) bedarfsweise auf die Achsgestelle (2, 3) oder auf den leichten Verbindungsrahmen (4) aufsetzbar und mittels Schnellverriegelungen damit lösbar verbindbar ist, wobei vorzugsweise der Kipprahmen (5) aus zu dem aus C- oder L-Profilen aufgebauten leichten Verbindungsrahmen (4) komplementär ausgebildeten und angeordneten Z-, C- oder L-Profilen aufgebaut ist.

4. Rahmenkonstruktion nach Anspruch 3, dadurch gekennzeichnet, daß der Kippstempelkopf (51) einer Hinterkipp-Presse oder ein damit gekuppeltes, die Hubkraft auf den Brückenrahmen (1) übertragendes Bauteil (52) über ein Zugglied (53) mit der Hinterkippachse (54) verbunden und bezüglich dieser zwangsgeführt ist, wobei im Falle vorgesehener Seitenkippmöglichkeit die Hinterkippachse (54) zusammen mit dem Brückenrahmen (1) seitenkippbar ist.

5. Rahmenkonstruktion nach Anspruch 3, dadurch gekennzeichnet, daß der Kipprahmen (5) zwei Hubstempel (55) aufweist, die beiderseits seiner Längenmitte angeordnet und über eine Kuppelstange (57) mit einem am Kipprahmen drehbar angelenkten Kurbelarm (56) gelenkig verbunden ist, und daß zum gleichzeitigen Drehen der beiden Kurbelarme ein als Hydraulikzylinder oder dgl. ausgebildetes, zwischen den beiden Kurbelarmen verlaufendes Betätigungsorgan (13S) dient, das über bezüglich der jeweiligen Kurbeldrehachse (56b) höhenversetzte Anlenkstellen (56d) mit den beiden Kurbelarmen gelenkig verbunden ist und diese Anlenkstellen der beiden Kurbelarme bei Betätigung auseinanderdrückt oder zusammenzieht, und wobei im Falle eines vorgesehenen Hinterkippbetriebs außerdem die dem vorderen Hubstempel (55) zugeordnete Kuppelstange als Hinterkipp-Presse (13H) ausgebildet ist.

6. Rahmenkonstruktion nach einem der Ansprüche 1 bis 5, dadurch gekennzeichnet, daß das fahrwerkseitige Element der Schnellkupplungen (70) jeweils mittels eines Schnellverriegelungsmechanismus (80) lösbar mit den Achsgestellen (2, 3) bzw. der Sattelplatte (42) bzw. dem leichten Verbindungsrahmen (4) oder Kipprahmen (5) verbunden ist, wobei der Schnellverriegelungsmechanismus eine fahrwerkseitig befestigte Lagerschale (81), einen in dieser Lager- schale ruhenden, am fahrgestellseitigen Schnellkupplungs- element (73) befestigten Lagerkörper (82) und einen in seiner Schließstellung den Lagerkörper übergreifenden Verschlußbügel (83) aufweist, der, vorzugsweise mittels einer Exzenterkurbel (84), zwischen seiner Schließstellung und seiner Öffnungsstellung bewegbar ist, und wobei im Falle der Verwendung des Schnellverriegelungsmechanismus (80) als reines Seitenkipp- oder als Hinterkippscharnierlager die Lagerschale (81) etwa halbzylindrisch und der Lagerkörper (82) zylindrisch und im Falle der Verwendung als kombiniertes Seitenkipp- und Hinterkippdrehlager die Lagerschale (81) etwa als Halbkugelschale und der Lagerkörper (82) als Lagerkugel ausgebildet ist.

7. Rahmenkonstruktion nach Anspruch 6, dadurch gekennzeichnet, daß mit dem fahrgestellseitigen Schnellkupplungselement (73) ein Mitnehmer (85) verbunden ist, der beim Einführen des Lagerkörpers (82) in die Lagerschale (81) an dem geöffneten Verschlußbügel (83) angreift und diesen im Zuge der Einführungsbewegung des Lagerkörpers in die Lagerschale in seine Schließstellung bewegt und in dieser sichert.

8. Rahmenkonstruktion nach einem der Ansprüche 1 bis 7, wobei die Achsgestelle über Blattfederaggregate mit jeweils einem mit der Achse verbundenen Blattfederpaket (60), einem vorderen Federbock (61), einem hinteren Federbock (62), und einem an vorderen Federbock angelenkten und mit der Achse (65) verbundenen Achsführungshebel (63) abgefedert sind, dadurch gekennzeichnet, daß das Blattfederpaket (60) im hinteren

0146141

Federbock (62) nach unten auslenkbar geführt ist und daß die Anlenkstelle (64) des Achsführungshebels (63) am vorderen Federbock (61) bezüglich der Achse (65) nach oben versetzt ist.

9. Rahmenkonstruktion nach einem der Ansprüche 1 bis 7, wobei die Achsgestelle über Blattfederaggregate mit jeweils einem Blattfederpaket (60), einem vorderen Federbock (61), einem hinteren Federbock (62) und einem am vorderen Federbock angelenkten und mit der Achse (65) verbundenen Achsführungshebel (63) abgefedert sind, dadurch gekennzeichnet, daß das Blattfederpaket (60) lose auf der Achse (65) aufliegt und daß an der Achse ein seitwärts wegragender Kurbelarm (67) befestigt ist, an welchem über eine bezüglich der Achse seitlich versetzte Anlenkstelle ein starr mit dem Blattfederpaket (60) und dem Achsführungshebel (63) verbundenes Verbindungsglied (68) angelenkt ist.

10. Rahmenkonstruktion nach Anspruch 1 für Anhänger mit Hinterkippaufbau, dadurch gekennzeichnet, daß eine im Vorderachsgestell (2) oder im Falle eines Sattelaufliegers im Fahrgestell der Sattelzugmaschine angeordnete Kipp-Presse (13) auf einen zum Kippen ausfahrbaren, dem Vorderachsgestell zugeordneten Teil (14a) der vorzugsweise sattelkupplungsartigen Schnellkupplung (11) bzw. auf einen zum Kippen ausfahrbaren Teil der Sattelkupplung der Sattelzugmaschine wirkt.

Fig. 1

0146141

Fig. 2

0146141

Fig. 3

(Figure labels: 20, 17, 16, 12, 20a, 4a, 3, 4, 14, 14a, 15, 13, 11, 2, 2a)

0146141

Fig. 4

Fig. 5

0146141

Fig. 6

Fig. 7

Fig. 8a

Fig. 8b

0146141

Fig. 9

Fig. 10

Fig. 11

## Fig. 12

## Fig. 13

0146141

Fig. 14

0146141

73

83

85

80

82

81

84

84a

Fig. 14a

73

85

82

84a

83

81

84

Fig. 14b

Fig. 15

0146141

Fig. 16

Fig. 16a

Fig. 17

Fig. 18

0146141

Fig. 19

Fig. 20